# EUROPEAN PATENT APPLICATION

(11) **EP 4 521 725 A1**
(43) Date of publication of application: **12.03.2025**
(21) Application number: 24735458.2
(22) Date of filing: 20.06.2024
(51) Int. Cl.: H04M 1/02, H01Q 1/24

(54) **ELECTRONIC DEVICE INCLUDING ANTENNA**

(30) Priority: 10.07.2023 KR 20230089228; 24.08.2023 KR 20230111416
(71) Applicant: Samsung Electronics Co., Ltd, Suwon-si, Gyeonggi-do 16677 (KR)
(72) Inventor: KIM, Namwoo, Suwon-si, Gyeonggi-do 16677 (KR); KANG, Jeongho, Suwon-si, Gyeonggi-do 16677 (KR); KIM, Sunglak, Suwon-si, Gyeonggi-do 16677 (KR); KIM, Yoonjung, Suwon-si, Gyeonggi-do 16677 (KR); PARK, Changi, Suwon-si, Gyeonggi-do 16677 (KR); SEOL, Kyungmoon, Suwon-si, Gyeonggi-do 16677 (KR); CHOI, Junyoung, Suwon-si, Gyeonggi-do 16677 (KR); HONG, Hyunchul, Suwon-si, Gyeonggi-do 16677 (KR); KIM, Minho, Suwon-si, Gyeonggi-do 16677 (KR); JANG, Kyihyun, Suwon-si, Gyeonggi-do 16677 (KR); YOON, Byounguk, Suwon-si, Gyeonggi-do 16677 (KR)
(74) Representative: HGF
(86) International application number: PCT/KR2024/008560
(87) International publication number: WO 2025/014118

(57) **Abstract**

The disclosure relates to an electronic device. An electronic device according to an embodiment of the disclosure may comprise a first housing; a second housing rotatably connected to one side of the first housing and including a first conductive portion; a third housing rotatably connected to another side of the first housing; a first hinge member disposed between the first housing and the second housing; a second hinge member disposed between the first housing and the third housing; and a flexible display disposed on front surfaces of the first, second and the third housings and configured to be at least partially folded or unfolded, in a state where the second housing and the third housing are folded toward a portion of the flexible display disposed on the first housing, the first conductive portion of the second housing and a side portion of the third housing may be spaced apart from each other.

## Description

### [Technical Field]

Various embodiments of the disclosure relate to an electronic device, e.g., an electronic device including an antenna.

### [Background Art]

Advancing information communication and semiconductor technologies accelerate the spread and use of various electronic devices. In particular, recent electronic devices are being developed to carry out communication while carried on.

The term "electronic device" may mean a device performing a particular function according to its equipped program, such as a home appliance, an electronic scheduler, a portable multimedia player, a mobile communication terminal, a tablet PC, a video/sound device, a desktop PC or laptop computer, a navigation for automobile, etc. For example, the electronic devices may output stored information as voices or images. As electronic devices are highly integrated, and high-speed, high-volume wireless communication becomes commonplace, an electronic device, such as a mobile communication terminal, is recently being equipped with various functions. For example, an electronic device comes with the integrated functionality, including an entertainment function, such as playing video games, a multimedia function, such as replaying music/videos, a communication and security function, such as for mobile banking, and a scheduling or e-wallet function. These electronic devices have been downsized to be conveniently carried by users.

### [Disclosure of Invention]

### [Solution to Problems]

An electronic device according to an embodiment of the disclosure may comprise a first housing; a second housing rotatably connected to one side of the first housing and including a first conductive portion; a third housing rotatably connected to another side of the first housing; a first hinge member disposed between the first housing and the second housing; a second hinge member disposed between the first housing and the third housing; and a flexible display disposed on a front surface of the first housing, the second housing, and the third housing and configured to be at least partially folded or unfolded. When each of the second housing and the third housing is in a state of being folded toward the flexible display disposed on the first housing, the first conductive portion of the second housing and a side portion of the third housing may be disposed to be spaced apart from each other.

An electronic device may comprise a flexible display at least partially folded or unfolded; a housing including a first housing, a second housing, and a third housing disposed to overlap each other in a folded state of the flexible display; a first conductive portion forming a side portion of the electronic device and disposed at an edge of the second housing; and a second conductive portion providing a portion of the third housing rotatably connected to the first housing and spaced apart from the first conductive portion in a folded state of the flexible display.

### [Brief Description of Drawings]

FIG. 1 is a block diagram illustrating an electronic device in a network environment according to an embodiment;
FIG. 2 is a perspective view illustrating an unfolded state of an electronic device according to an embodiment of the disclosure;
FIG. 3 is a perspective view illustrating an unfolded state of an electronic device according to an embodiment of the disclosure;
FIG. 4 is a perspective view illustrating a folded state of an electronic device according to an embodiment of the disclosure;
FIG. 5A is a side view illustrating a folded state of an electronic device according to an embodiment of the disclosure;
FIG. 5B is a side view illustrating a folded state of an electronic device according to an embodiment of the disclosure;
FIG. 5C is a side view illustrating a folded state of an electronic device according to an embodiment of the disclosure;
FIG. 6 is an exploded perspective view illustrating a portion of an electronic device according to an embodiment of the disclosure;
FIG. 7 is a concept view illustrating an antenna structure according to an embodiment of the disclosure;
FIG. 8 is a cross-sectional view illustrating a portion of an electronic device according to an embodiment of the disclosure;
FIG. 9 is a cross-sectional view illustrating a portion of an electronic device according to an embodiment of the disclosure;
FIG. 10A illustrates a portion of an electronic device according to an embodiment of the disclosure;
FIG. 10B illustrates a portion of an electronic device according to an embodiment of the disclosure;
FIG. 11A is a cross-sectional view illustrating a portion of an electronic device according to an embodiment of the disclosure;
FIG. 11B is a cross-sectional view illustrating a portion of an electronic device according to an embodiment of the disclosure;
FIG. 12A is a perspective view illustrating an unfolded state of an electronic device according to an embodiment of the disclosure;
FIG. 12B is a cross-sectional view illustrating a portion of an electronic device according to an embodiment of the disclosure;
FIG. 13 is a cross-sectional view illustrating a portion of an electronic device according to an embodiment of the disclosure;
FIG. 14A is a perspective view illustrating an unfolded state of an electronic device according to an embodiment of the disclosure;
FIG. 14B illustrates a portion of an electronic device according to an embodiment of the disclosure;
FIG. 15A is a side view illustrating a folded state of an electronic device according to an embodiment of the disclosure;
FIG. 15B is a side view illustrating a folded state of an electronic device according to an embodiment of the disclosure;
FIG. 16 is a cross-sectional view illustrating a portion of an electronic device according to an embodiment of the disclosure;
FIG. 17A is a cross-sectional view illustrating a portion of an electronic device according to an embodiment of the disclosure;
FIG. 17B is a cross-sectional view illustrating a portion of an electronic device according to an embodiment of the disclosure;
FIG. 17C is a cross-sectional view illustrating a portion of an electronic device according to an embodiment of the disclosure; and
FIG. 18 is a graph illustrating the performance of an antenna of an electronic device according to an embodiment of the disclosure.

### [Mode for the Invention]

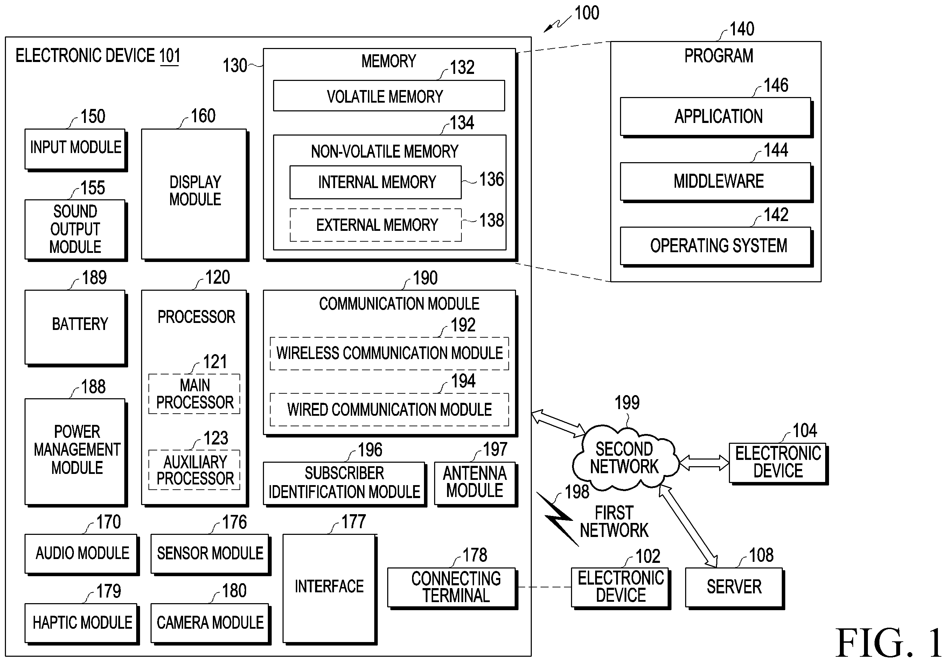

FIG. 1 is a block diagram illustrating an electronic device 101 in a network environment 100 according to various embodiments.

Referring to FIG. 1, the electronic device 101 in the network environment 100 may communicate with at least one of an electronic device 102 via a first network 198 (e.g., a short-range wireless communication network), or an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, a sound output module 155, a display module 160, an audio module 170, a sensor module 176, an interface 177, a connecting terminal According to an embodiment, the display module 160 may include a first display module 351 corresponding to the user's left eye and/or a second display module 353 corresponding to the user's right eye., a haptic module 179, a camera module 180, a power management module 188, a battery 189, a communication module 190, a subscriber identification module (SIM) 196, or an antenna module 197. In an embodiment, at least one (e.g., the connecting terminal 178) of the components may be omitted from the electronic device 101, or one or more other components may be added in the electronic device 101. According to an embodiment, some (e.g., the sensor module 176, the camera module 180, or the antenna module 197) of the components may be integrated into a single component (e.g., the display module 160).

The processor 120 may execute, for example, software (e.g., a program 140) to control at least one other component (e.g., a hardware or software component) of the electronic device 101 coupled with the processor 120, and may perform various data processing or computation. According to an embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be configured to use lower power than the main processor 121 or to be specified for a designated function. The auxiliary processor 123 may be implemented as separate from, or as part of the main processor 121.

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an image signal processor or a communication processor) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. The artificial intelligence model may be generated via machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted Boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thereto. The memory 130 may include the volatile memory 132 or the non-volatile memory 134.

The program 140 may be stored in the memory 130 as software, and may include, for example, an operating system (OS) 142, middleware 144, or an application 146.

The input module 150 may receive a command or data to be used by other component (e.g., the processor 120) of the electronic device 101, from the outside (e.g., a user) of the electronic device 101. The input module 150 may include, for example, a microphone, a mouse, a keyboard, keys (e.g., buttons), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101. The display 160 may include, for example, a display, a hologram device, or a projector and control circuitry to control a corresponding one of the display, hologram device, and projector. According to an embodiment, the display 160 may include a touch sensor configured to detect a touch, or a pressure sensor configured to measure the intensity of a force generated by the touch.

The audio module 170 may convert a sound into an electrical signal and vice versa. According to an embodiment, the audio module 170 may obtain the sound via the input module 150, or output the sound via the sound output module 155 or a headphone of an external electronic device (e.g., an electronic device 102) directly (e.g., wiredly) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an accelerometer, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an embodiment, the interface 177 may include, for example, a high definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102). According to an embodiment, the connecting terminal 178 may include, for example, a HDMI connector, a USB connector, a SD card connector, or an audio connector (e.g., a headphone connector).

The haptic module 179 may convert an electrical signal into a mechanical stimulus (e.g., a vibration or motion) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to an embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device 104 via a first network 198 (e.g., a short-range communication network, such as BluetoothTM, wireless-fidelity (Wi-Fi) direct, or infrared data association (IrDA)) or a second network 199 (e.g., a long-range communication network, such as a legacy cellular network, a 5G network, a next-generation communication network, the Internet, or a computer network (e.g., local area network (LAN) or wide area network (WAN)). These various types of communication modules may be implemented as a single component (e.g., a single chip), or may be implemented as multi components (e.g., multi chips) separate from each other. The wireless communication module 192 may identify or authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 197 may transmit or receive a signal or power to or from the outside (e.g., the external electronic device). According to an embodiment, the antenna module 197 may include one antenna including a radiator formed of a conductor or conductive pattern formed on a substrate (e.g., a printed circuit board (PCB)). According to an embodiment, the antenna module 197 may include a plurality of antennas (e.g., an antenna array). In this case, at least one antenna appropriate for a communication scheme used in a communication network, such as the first network 198 or the second network 199, may be selected from the plurality of antennas by, e.g., the communication module 190. The signal or the power may then be transmitted or received between the communication module 190 and the external electronic device via the selected at least one antenna. According to an embodiment, other parts (e.g., radio frequency integrated circuit (RFIC)) than the radiator may be further formed as part of the antenna module 197.

According to various embodiments, the antenna module 197 may form a mmWave antenna module. According to an embodiment, the mmWave antenna module may include a printed circuit board, a RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. The external electronic devices 102 or 104 each may be a device of the same or a different type from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or mobile edge computing. In another embodiment, the external electronic device 104 may include an Internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or health-care) based on 5G communication technology or IoT-related technology.

The electronic device according to various embodiments of the disclosure may be one of various types of electronic devices. The electronic devices may include, for example, a portable communication device (e.g., a smartphone), a computer device, a portable multimedia device, a portable medical device, a camera, a wearable device, or a home appliance. According to an embodiment of the disclosure, the electronic devices are not limited to those described above.

It should be appreciated that various embodiments of the present disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things, unless the relevant context clearly indicates otherwise. As used herein, each of such phrases as "A or B," "at least one of A and B," "at least one of A or B," "A, B, or C," "at least one of A, B, and C," and "at least one of A, B, or C," may include all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," "coupled to," "connected with," or "connected to" another element (e.g., a second element), it means that the element may be coupled with the other element directly (e.g., wiredly), wirelessly, or via a third element.

As used herein, the term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an application-specific integrated circuit (ASIC).

Various embodiments as set forth herein may be implemented as software (e.g., the program 140) including one or more instructions that are stored in a storage medium (e.g., internal memory 136 or external memory 138) that is readable by a machine (e.g., the electronic device 101). For example, a processor (e.g., the processor 120) of the machine (e.g., the electronic device 101) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a complier or a code executable by an interpreter. The storage medium readable by the machine may be provided in the form of a non-transitory storage medium. Wherein, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium.

According to an embodiment, a method according to various embodiments of the disclosure may be included and provided in a computer program product. The computer program products may be traded as commodities between sellers and buyers. The computer program product may be distributed in the form of a machine-readable storage medium (e.g., compact disc read only memory (CD-ROM)), or be distributed (e.g., downloaded or uploaded) online via an application store (e.g., Play StoreTM), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to various embodiments, each component (e.g., a module or a program) of the above-described components may include a single entity or multiple entities. Some of the plurality of entities may be separately disposed in different components. According to various embodiments, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

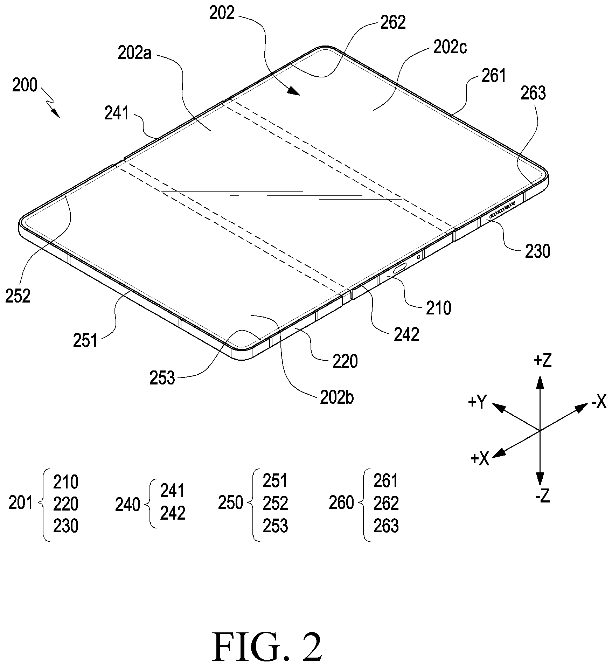

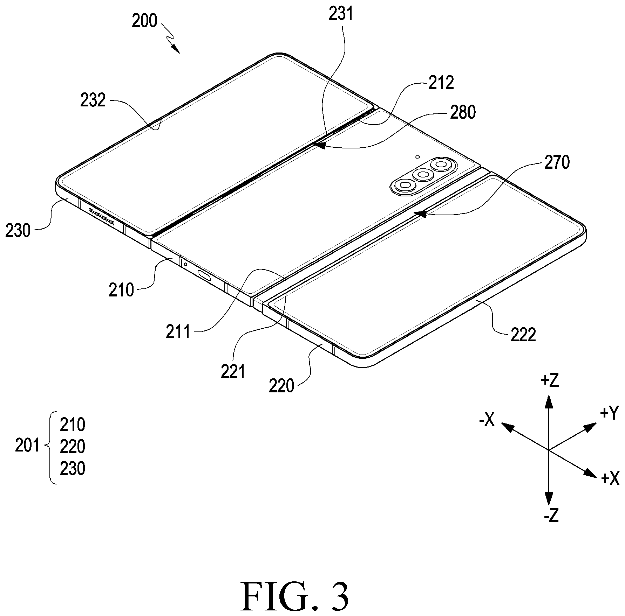

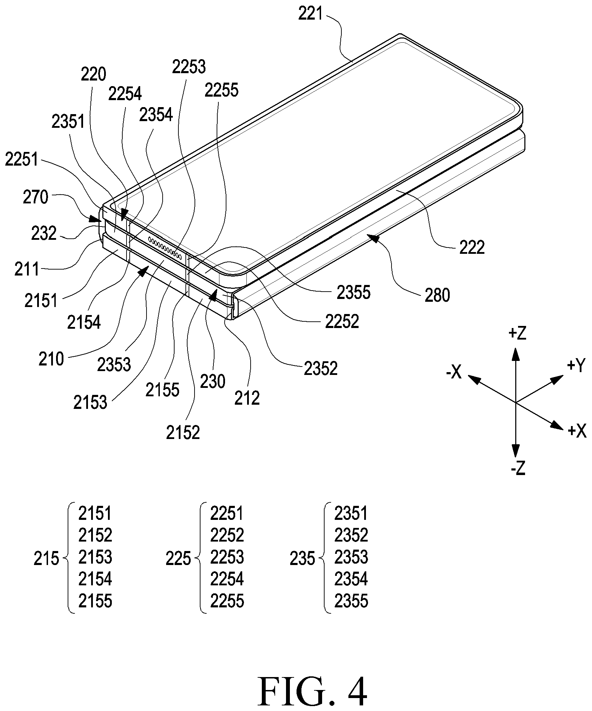

FIG. 2 is a perspective view illustrating an unfolded state of an electronic device 200 according to an embodiment of the disclosure. FIG. 3 is a perspective view illustrating an unfolded state (or open state, or fully unfolded state, or fully open state) of an electronic device 200 according to an embodiment of the disclosure. FIG. 2 shows a view of one side surface (e.g., front surface) of the electronic device 200, as obliquely viewed. FIG. 3 shows a view of the other side surface (e.g., rear surface) of the electronic device 200, as obliquely viewed. The components described with reference to FIGS. 2 and 3 may be identical in whole or part to the components described with reference to FIG. 1. The components described with reference to FIGS. 2 and 3 may be identical in whole or part to the components described with reference to FIGS. 4 to 18. As shown in FIGS. 2 and 3, the unfolded state of the electronic device 200 may be defined as a "first state."

The electronic device 200 may include a housing 201. The electronic device 200 may include a display 202. The housing 201 may form a space where the display 202 is disposed. The display 202 may be a flexible display 202. At least a portion of the display 202 may be folded or unfolded.

According to an embodiment, the housing 201 includes a first housing 210. The housing 201 may include a second housing 220. The housing 201 may include a third housing 230. The first housing 210 may be disposed between the second housing 220 and the third housing 230. The second housing 220 may be rotatably coupled to the first housing 210. The third housing 230 may be rotatably coupled to the first housing 210. The display 202 may include a first display area 202a corresponding to the first housing 210, a second display area 202b corresponding to the second housing 220, and a third display area 202c corresponding to the third housing 230.

According to an embodiment, the electronic device 200 includes supports 240, 250, and 260 (or surrounds 240, 250, and 260, rim portions 240, 250, and 260 or edge portions 240, 250, and 260, as may also be termed herein). The supports 240, 250, and 260 may be disposed between the housing 201 and the display 202. The supports 240, 250, and 260 may be coupled to the housing 201 and may support the display 202. The supports 240, 250, and 260 may be disposed to surround edges of the display 202. The supports 240, 250, and 260 may extend along the circumference of the housing 201. The supports 240, 250, and 260 may include a first support 240 disposed in the first housing 210, a second support 250 disposed in the second housing 220, and a third support 260 disposed in the third housing 230. The support 240, 250, or 260 may be referred to as a "body". The support 240, 250, or 260 may, additionally or alternatively, be referred to as a "frame", a "sealing member", a "peripheral part", a "circumferential part", a "peripheral structure" or a "circumferential structure".

According to an embodiment, the supports 240, 250, and 260 include a first support 240. The first support 240 may be disposed between the first housing 210 and the display 202. The first support 240 may be disposed along an edge of the first housing 210. The first support 240 may include a 1-1th support 241 (or first part 241 of the first support 240) and a 1-2th support 242 (or second part 242 of the first support 240). At least a portion of the display 202 may be disposed between the 1-1th support 241 and the 1-2th support 242. The 1-1th support 241 may be disposed at one end portion of the first housing 210, and the 1-2th support 242 may be disposed at the other end portion of the first housing 210. As such, a first part of the display 202 is disposed between the 1-1th support 241 and the 1-2th support 242. Each of the first, second, and third supports 240, 250, and 260 may be referred to as a "support". The support 240, 250, or 260 may include a non-conductive member. The support 240, 250, or 260 may be referred to as a "deco," "finishing member," or "non-conductive member."

According to an embodiment, the supports 240, 250, and 260 include a second support 250. The second support 250 may be disposed between the second housing 220 and the display 202. The second support 250 may be disposed along an edge of the second housing 220. The second support 250 may include a 2-1th support 251 (or first part 251 of the second support 250), a 2-2th support 252 (or second part 252 of the second support 250), and a 2-3th support 253 (or third part 253 of the second support 250). At least a portion of the display 202 may be disposed between the 2-2th support 252 and the 2-3th support 253. The 2-1th support 251 may connect the 2-2th support 252 and the 2-3th support 253. The 2-1th support 251 may extend along an edge (e.g., the edge 222 of FIG. 3) of the second housing 220. The 2-1th support 251 may be disposed between the edge 222 of the second housing 220 and the display 202. The 2-2th support 252 may be disposed at one end portion of the second housing 220, and the 2-3th support 253 may be disposed at the other end portion of the second housing 220. As such, a second part of the display 202 is disposed between the 2-2th support 252 and the 2-3th support 253 (e.g. the second part of the display 202 is different to the first part of the display 202). The 2-1th support 251 may be referred to as a "support frame" or a "first support frame". Each of the 2-2th support 252 and the 2-3th support 253 may be referred to as a "second support frame".

According to an embodiment, the supports 240, 250, and 260 include a third support 260. The third support 260 may be disposed between the third housing 230 and the display 202. The third support 260 may be disposed along an edge of the third housing 230. The third support 260 may include a 3-1th support 261 (or first part 261 of the third support 260), a 3-2th support 262 (or second part 262 of the third support 260), and a 3-3th support 263 (or third part 263 of the third support 260). At least a portion of the display 202 may be disposed between the 3-2th support 262 and the 3-3th support 263. The 3-1th support 261 may connect the 3-2th support 262 and the 3-3th support 263. The 3-1th support 261 may extend along an edge (e.g., the edge 232 of FIG. 3) of the third housing 230. The 3-1th support 261 may be disposed between the edge 232 of the third housing 230 and the display 202. The 3-2th support 262 may be disposed at one end portion of the third housing 230, and the 3-3th support 263 may be disposed at the other end portion of the third housing 230. As such, a third part of the display 202 is disposed between the 3-2th support 262 and the 3-3th support 263 (e.g. the third part of the display 202 is different to the first part of the display 202 and the second part of the display 202). The 3-1th support 261 may be referred to as a "support frame" or a "first support frame". Each of the 3-2th support 262 and the 3-3th support 263 may be referred to as a "second support frame".

According to an embodiment, the first housing 210 includes a 1-1th side portion 211 (or first side or edge portion 211 of the first housing 210) and a 1-2th side portion 212 (or second side or edge portion 212 of the first housing 210). The 1-1th side portion 211 and the 1-2th side portion 212 may form two opposite side surfaces, respectively, of the first housing 210. The second housing 220 may be coupled to the 1-1th side portion 211. The third housing 230 may be coupled to the 1-2th side portion 212. The 1-1th side portion 211 may be referred to as a "first coupling portion". The 1-2th side portion 212 may be referred to as a "second coupling portion". The 1-1th side portion 211 may be referred to as a "first portion". The 1-2th side portion 212 may be referred to as a "second portion".

According to an embodiment, the second housing 220 includes a 2-1th side portion 221 (or first side or edge portion 221 of the second housing 220) and a 2-2th side portion 222 (or second side or edge portion 222 of the second housing 220). The 2-1th side portion 221 and the 2-2th side portion 222 may form two opposite side surfaces, respectively, of the second housing 220. The 2-1th side portion 221 may be coupled to the first housing 210. The 2-2th side portion 222 may form a side surface of the housing 201. The 2-2th side portion 222 may be referred to as an "edge". The 2-1th side portion 221 may be referred to as a "third side portion". The 2-2th side portion 222 may be referred to as a "fourth side portion".

According to an embodiment, the third housing 230 may include a 3-1th side portion 231 (or first side or edge portion 231 of the third housing 230) and a 3-2th side portion 232 (or second side or edge portion 232 of the third housing 230). The 3-1th side portion 231 and the 3-2th side portion 232 may form two opposite side surfaces, respectively, of the third housing 230. The 3-1th side portion 231 may be coupled to the first housing 210. The 3-2th side portion 232 may form a side surface of the housing 201. The 3-2th side portion 232 may be referred to as an "edge". The 3-1th side portion 231 may be referred to as a "fifth side portion". The 3-2th side portion 232 may be referred to as a "sixth side portion".

According to an embodiment, the electronic device 200 includes a first hinge 270 and a second hinge 280. The first hinge 270 may be disposed between the first housing 210 and the second housing 220. The first hinge 270 may be disposed between the 1-1th side portion 211 and the 2-1th side portion 221. The first hinge 270 may rotatably connect the first housing 210 and the second housing 220. The second hinge 280 may be disposed between the first housing 210 and the third housing 230. The second hinge 280 may be disposed between the 1-2th side portion 212 and the 3-1th side portion 231. The second hinge 280 may rotatably connect the first housing 210 and the third housing 230. The first hinge 270 may be referred to as a "first hinge member". The second hinge 280 may be referred to as a "second hinge member".

It will be understood that, in various embodiments of the present disclosure, an electronic device 200 comprises a housing 200, a first hinge 270, a second hinge 280 and a flexible display 202, the housing 200 comprising a first housing 210, a second housing 220 and a third housing 230, wherein each of the first, second and third housing 210, 220, 230 comprises respective first and second side portions 211, 221, 231, 212, 222, 232, wherein the first housing 210 comprises a first support 240 comprising first and second parts 241, 242, and wherein each of the second and third housing 220, 230 comprises respective second and third supports 250, 260 each comprising respective first, second and third parts 251, 261, 252, 262, 253, 263.

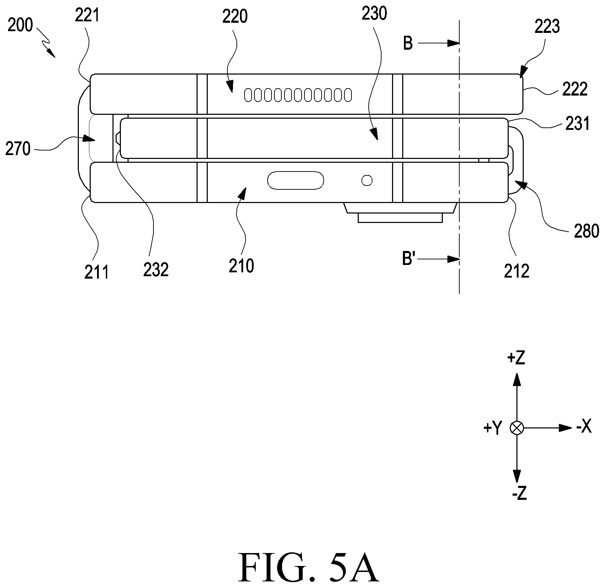

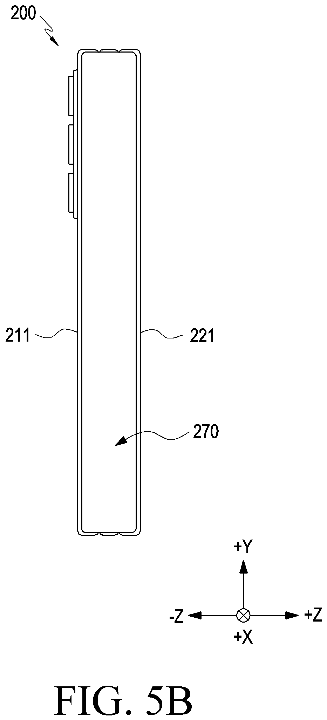

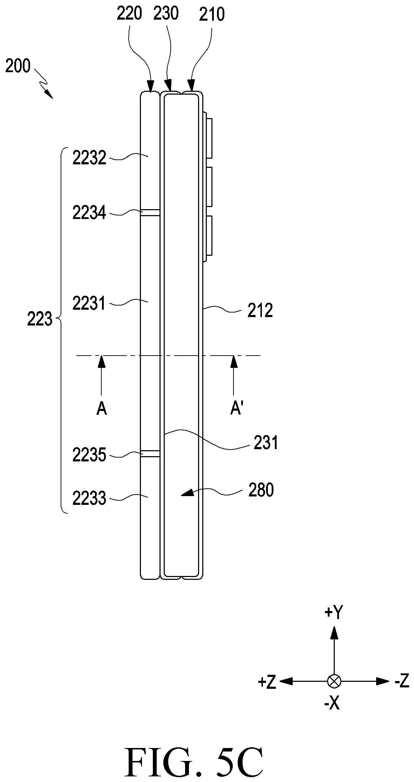

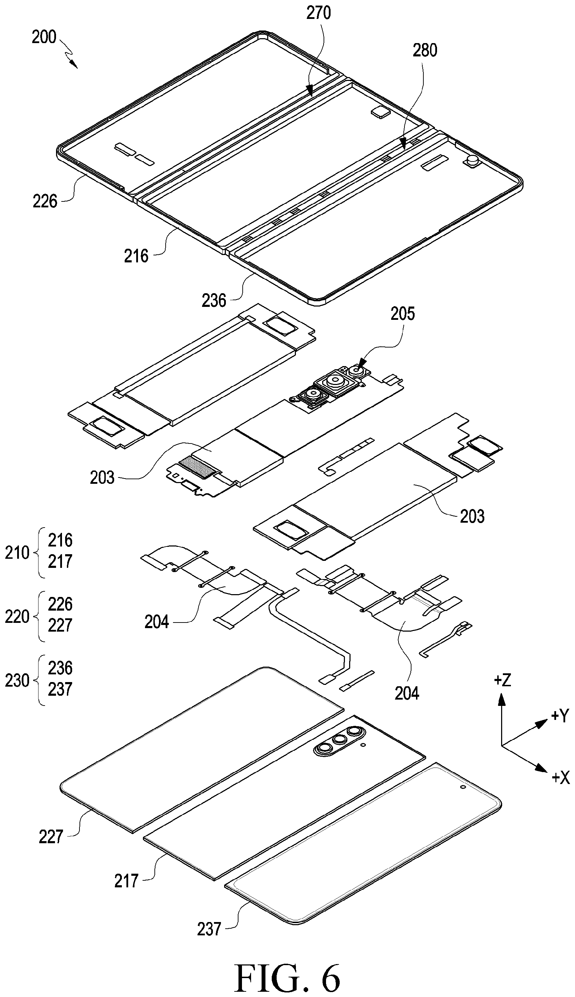

FIG. 4 is a perspective view illustrating a folded state (or fully folded state, or closed state) of an electronic device 200 according to an embodiment of the disclosure. FIG. 5A is a side view of the electronic device 200 of FIG. 4 viewed in one direction (e.g., +Z direction). FIG. 5B is a side view of the electronic device 200 of FIG. 4 viewed in one direction (e.g., -X direction). FIG. 5C is a side view of the electronic device 200 of FIG. 4 viewed in one direction (e.g., +X direction). The components described with reference to FIGS. 4 to 5C may be identical in whole or part to the components described with reference to FIGS. 1 to 3. The components described with reference to FIGS. 4 to 5C may be identical in whole or part to the components described with reference to FIGS. 6 to 18. As illustrated in FIGS. 4, 5A, 5B, and 5C, a folded state of the electronic device 200 may be defined as a "second state".

According to an embodiment, the second housing 220 is rotated with respect to the first housing 210. The first hinge 270 may provide a center of rotation to the second housing 220. For example, the second housing 220 rotates around the first hinge 270, where the first hinge 270 rotatably couples (directly or indirectly) the second housing 220 to the first housing 210. The first hinge 270 may connect the 1-1th side portion 211 of the first housing 210 and the 2-1th side portion 221 of the second housing 220. The third housing 230 may be rotated with respect to the first housing 210. The second hinge 280 may provide a center of rotation to the third housing 230. For example, the third housing 230 rotates around the second hinge 280, where the second hinge 280 rotatably couples (directly or indirectly) the third housing 230 to the first housing 210. The second hinge 280 may connect the 1-2th side portion 212 of the first housing 210 and the 3-1th side portion 231 of the third housing 230.

According to an embodiment, in the folded state of the electronic device 200, each of the first, second, and third housings 210, 220, and 230 are arranged in one direction (e.g., the +Z direction). The third housing 230 may be disposed above the first housing 210, and the second housing 220 may be disposed above the third housing 230. The third housing 230 may be disposed between the first housing 210 and the second housing 220. Such a folded state may be referred to as a G-fold, with a device capable of such a folded state being referred to as a G-fold type device. Various embodiments of the present disclosure also consider other types of devices, such as a Z-fold type device in which, in a folded state, for a first housing 210, a second housing 220 and a third housing 230 connected as described above, the first housing 210 would be disposed above the third housing 230 and the second housing 220 would be disposed above the first housing 210. It will be appreciated that the features described herein in relation to the type of electronic device 200 shown in FIG. 5A can also be applied to such other types of electronic device, including a Z-fold type device as defined above.

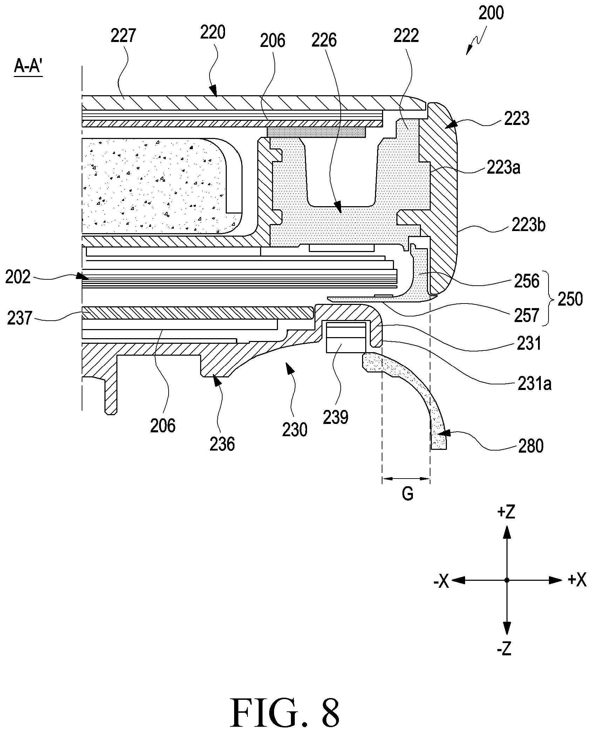

According to an embodiment, the electronic device 200 includes an antenna 223. The antenna 223 may be formed at an edge 222 of the second housing 220. The antenna 223 may be integrated with the second housing 220 and may be a portion of the edge 222. For example, the antenna 223 is formed on or of one or more parts of an end of the second housing 220 corresponding to the edge 222. The antenna 223 may be manufactured separately from the second housing 220 and may be coupled to the edge 222 of the second housing 220. The antenna 223 may be referred to as, or considered to comprise, a "first conductive portion". The antenna 223 may include a metal material. The antenna 223 is configured to transmit and/or receive radio waves. A description of the antenna 223 may correspond to the description of the antenna module 197; e.g. the antenna 223 may correspond to the antenna module 197 or be included in the antenna module 197. According to an embodiment, the edge 222 of the second housing 220 is an area of the second housing 220 which overlaps an area in which the screen of the flexible display 202 is not visible from the outside of the housing (e.g., the second housing 220) when the flexible display 202 is viewed from the screen display direction (e.g., the +Z direction). For example, the edge 222 of the second housing 220 includes a bezel portion (e.g., the second support portion 257 of FIG. 8) of the second housing 220 and an antenna 223.

According to an embodiment, in the folded state of the electronic device 200, the antenna 223 is spaced apart from the second hinge 280. One surface of the antenna 223 may face the second hinge 280. The width of the first hinge 270 may be larger than the width of the second hinge 280. For example, with reference to FIG. 5A, the length of the first hinge 270 extending in the +Z direction may be larger than the length of the second hinge 280 extending in the +Z direction. For a Z-fold type device, the length of the first hinge 270 extending in the Z direction may be substantially the same as the length of the second hinge 280 extending in the Z direction.

According to an embodiment, the antenna 223 includes a first antenna portion 2231, a second antenna portion 2232, and a third antenna portion 2233. The first, second, and third antenna portions 2231, 2232, and 2233 may be spaced apart from each other along the edge 222 of the second housing 220. Each of the first, second, and third antenna portions 2231, 2232, and 2233 may include a conductive material. The antenna 223 may include a first segmented portion 2234 and a second segmented portion 2235. The first segmented portion 2234 may be disposed between the first antenna portion 2231 and the second antenna portion 2232. The second segmented portion 2235 may be disposed between the first antenna portion 2231 and the third antenna portion 2233. In various embodiments, the first and second segmented portions 2234, 2235 are not considered part of the antenna 223.

According to an embodiment, the electronic device 200 includes a first antenna 215, a second antenna 225, and a third antenna 235. The first antenna 215 may form a portion of the first housing 210. The first antenna 215 may form at least a portion of the surface of the first housing 210. The second antenna 225 may form a portion of the second housing 220. The second antenna 225 may form at least a portion of the surface of the second housing 220. The third antenna 235 may form a portion of the third housing 230. The third antenna 235 may form at least a portion of the surface of the third housing 230.

The first antenna 215 may include a 1-1th antenna portion 2151, a 1-2th antenna portion 2152, and a 1-3th antenna portion 2153. The 1-3th antenna portion 2153 may be disposed between the 1-1th antenna portion 2151 and the 1-2th antenna portion 2152. The first antenna 215 may include a 1-1-th segmented portion 2154 and a 1-2-th segmented portion 2155. The 1-1th antenna portion 2151 and the 1-3th antenna portion 2153 may be spaced apart from each other, and the 1-1th segmented portion 2154 may be disposed between the 1-1th antenna portion 2151 and the 1-3th antenna portion 2153. The 1-2th antenna portion 2152 and the 1-3th antenna portion 2153 may be spaced apart from each other, and the 1-2th segmented portion 2155 may be disposed between the 1-2th antenna portion 2152 and the 1-3th antenna portion 2153.

The second antenna 225 may include a 2-1th antenna portion 2251, a 2-2th antenna portion 2252, and a 2-3th antenna portion 2253. The 2-3th antenna portion 2253 may be disposed between the 2-1th antenna portion 2251 and the 2-2th antenna portion 2252. The second antenna 225 may include a 2-1th segmented portion 2254 and a 2-2th segmented portion 2255. The 2-1th antenna portion 2251 and the 2-3th antenna portion 2253 may be spaced apart from each other, and the 2-1th segmented portion 2254 may be disposed between the 2-1th antenna portion 2251 and the 2-3th antenna portion 2253. The 2-2th antenna portion 2252 and the 2-3th antenna portion 2253 may be spaced apart from each other, and the 2-2th segmented portion 2255 may be disposed between the 2-2th antenna portion 2252 and the 2-3th antenna portion 2253.

The third antenna 235 may include a 3-1th antenna portion 2351, a 3-2th antenna portion 2352, and a 3-3th antenna portion 2353. The 3-3th antenna portion 2353 may be disposed between the 3-1th antenna portion 2351 and the 3-2th antenna portion 2352. The third antenna 235 may include a 3-1th segmented portion 2354 and a 3-2th segmented portion 2355. The 3-1th antenna portion 2351 and the 3-3th antenna portion 2353 may be spaced apart from each other, and the 3-1th segmented portion 2354 may be disposed between the 3-1th antenna portion 2351 and the 3-3th antenna portion 2353. The 3-2th antenna portion 2352 and the 3-3th antenna portion 2353 may be spaced apart from each other, and the 3-2th segmented portion 2355 may be disposed between the 3-2th antenna portion 2352 and the 3-3th antenna portion 2353.

According to an embodiment, in the folded state of the electronic device 200, the first antenna 215, the second antenna 225, and the third antenna 235 are aligned with each other. In the folded state of the electronic device 200, the first antenna 215, the second antenna 225, and the third antenna 235 may be aligned with each other in a direction (e.g., +Z direction) in which the housings 210, 220, and 230 are stacked. For example, in the folded state of the electronic device 200, the 1-1th antenna portion 2151, the 2-1th antenna portion 2251, and the 3-1th antenna portion 2351 are aligned in the first direction (e.g., the +Z direction). For example, in the folded state of the electronic device 200, the 1-2th antenna portion 2152, the 2-2th antenna portion 2252, and the 3-2th antenna portion 2352 are aligned in the first direction (e.g., the +Z direction). For example, in the folded state of the electronic device 200, the 1-3th antenna portion 2153, the 2-3th antenna portion 2253, and the 3-3th antenna portion 2353 are aligned in the first direction (e.g., the +Z direction). For example, in the folded state of the electronic device 200, the 1-1th segmented portion 2154, the 2-1th segmented portion 2254, and the 3-1th segmented portion 2354 are aligned in the first direction (e.g., the +Z direction). For example, in the folded state of the electronic device 200, the 1-2th segmented portion 2155, the 2-2th segmented portion 2255, and the 3-2th segmented portion 2355 are aligned in the first direction (e.g., the +Z direction).

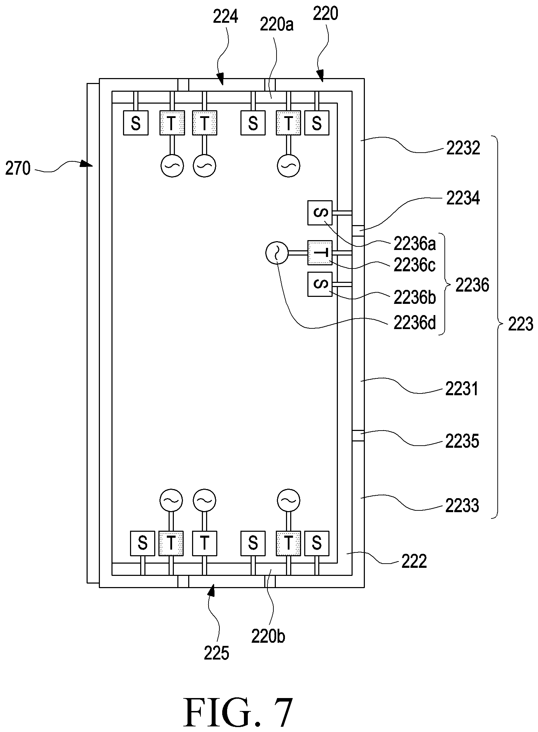

FIG. 6 is an exploded view illustrating a portion of an electronic device 200 according to an embodiment of the disclosure. FIG. 6 illustrates a state in which a display (e.g., the display 202 of FIG. 2) is not illustrated. The components described with reference to FIG. 6 may be identical in whole or part to the components described with reference to FIGS. 1 to 5C. The components described with reference to FIG. 6 may be identical in whole or part to the components described with reference to FIGS. 7 to 18.

According to an embodiment, the first housing 210 includes a first housing body 216. The first housing 210 may include a first cover 217. The first housing body 216 and the first cover 217 may be coupled to each other. At least a portion of the display (e.g., the display 202 of FIG. 2) may be seated on the first housing body 216. At least a portion of the second display (e.g., the second display 206 of FIG. 8) may be disposed between the first housing body 216 and the first cover 217.

According to an embodiment, the second housing 220 includes a second housing body 226. The second housing 220 may include a second cover 227. The second housing body 226 and the second cover 227 may be coupled to each other. At least a portion of the display (e.g., the display 202 of FIG. 2) may be seated on the second housing body 226. At least a portion of the second display (e.g., the second display 206 of FIG. 8) may be disposed between the second housing body 226 and the second cover 227. An antenna (e.g., the antenna 223 of FIG. 5C) may be a portion of the second housing body 226.

According to an embodiment, the third housing 230 includes a third housing body 236. The third housing 230 may include a third cover 237. The third housing body 236 and the third cover 237 may be coupled to each other. At least a portion of the display (e.g., the display 202 of FIG. 2) may be seated on the third housing body 236. At least a portion of the second display (e.g., the second display 206 of FIG. 8) may be disposed between the third housing body 236 and the third cover 237.

The first hinge 270 may rotatably connect the first housing body 216 and the second housing body 226. The second hinge 280 may rotatably connect the first housing body 216 and the third housing body 236.

According to an embodiment, the electronic device 200 includes a battery 203. The battery 203 may supply power to electrical components (e.g., the display 202, the second display 206, and the circuit board 204) of the electronic device 200. The battery 203 may be disposed between the housing bodies 216, 226, and 236 and the covers 217, 227, and 237. The electronic device 200 may include a circuit board 204. The circuit board 204 may be electrically connected to electrical components (e.g., the display 202, the second display 206, the antenna circuit 2236, and the battery 203) of the electronic device 200. The circuit board 204 may be disposed between the housing bodies 216, 226, and 236 and the covers 217, 227, and 237. The electronic device 200 may include a camera assembly 205. The camera assembly 205 may be disposed between the housing bodies 216, 226, and 236 and the covers 217, 227, and 237.

FIG. 7 is a view conceptually illustrating a portion of the electronic device 200 for describing the structure of the antenna 223 according to an embodiment of the disclosure. The components described with reference to FIG. 7 may be identical in whole or part to the components described with reference to FIGS. 1 to 6. The components described with reference to FIG. 7 may be identical in whole or part to the components described with reference to FIGS. 8 to 18.

According to an embodiment, the antenna 223 is disposed at the edge 222 of the second housing 220. The antenna 223 may be a portion of the edge 222. The antenna 223 may include first, second, and third antenna portions 2231, 2232, and 2233. The antenna 223 may include first and second segmented portions 2234 and 2235. The antenna 223 may include an antenna circuit 2236. The antenna circuit 2236 may be electrically connected to a circuit board (e.g., the circuit board 204 of FIG. 6). The antenna circuit 2236 may include a first switch 2236a and a second switch 2236b. The first segmented portion 2234 may be positioned between the first switch 2236a and the second switch 2236b. The antenna circuit 2236 may include a tuner 2236c. The antenna circuit 2236 may include a feeding unit 2236d. The feeding unit 2236d may be connected to the tuner 2236c.

According to an embodiment, the electronic device 200 includes an upper antenna 224 and a lower antenna 225. The upper antenna 224 and the lower antenna 225 may be disposed in the second housing 220. The upper antenna 224 and the lower antenna 225 may be portions of the second housing 220. The upper antenna 224 may be at least a portion of the upper end portion 220a of the second housing 220. The lower antenna 225 may be at least a portion of the lower end portion 220b of the second housing 220. The lower antenna 225 may correspond to the second antenna 225 described previously.

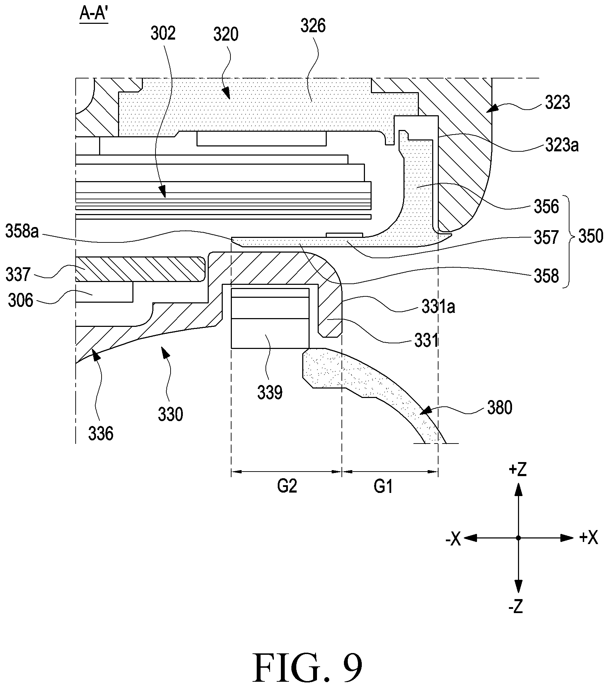

FIG. 8 is a cross-sectional view illustrating a portion of an electronic device 200 according to an embodiment of the disclosure, taken along line A-A' of FIG. 5C. The components described with reference to FIG. 8 may be identical in whole or part to the components described with reference to FIGS. 1 to 7. The components described with reference to FIG. 8 may be identical in whole or part to the components described with reference to FIGS. 9 to 18.

According to an embodiment, the second housing 220 includes a second housing body 226 and a second cover 227. The second housing 220 may include an edge 222 and an antenna 223. The edge 222 may be a portion of the second housing body 226, and the antenna 223 may form a portion of the edge 222 or be formed on a portion of the edge 222. For example, the antenna 223 may be a conductive portion formed at the edge 222 of the second housing body 226. The antenna 223 may be referred to as a "first conductive portion".

According to an embodiment, the third housing 230 includes a third housing body 236 and a third cover 237. The third housing 230 may include a 3-1th side portion 231 coupled to the second hinge 280. The 3-1th side portion 231 may be a portion of the third housing body 236. The 3-1th side portion 231 may face the first conductive portion 223 in the folded state of the electronic device 200. The first conductive portion 223 may be spaced apart from the 3-1th side portion 231 in the folded state of the electronic device 200. The 3-1th side portion 231 may include a metal material. The 3-1th side portion 231 may be referred to as a "second conductive portion". In various examples, the second conductive portion is different to the 3-1th side portion 231, with the second conductive portion defined as a portion of the second hinge 280 (e.g. a metal portion of the second hinge 280). In an example of such a case, the second conductive portion is located on a side of the second hinge 280 biased towards the third housing 230; while in another example of such a case, the second conductive portion is located on a side of the second hinge 280 biased towards the first housing 210. That is, referring to FIG. 5A, the second conductive portion may be disposed in the second hinge 280 closer to 3-1th side portion 231 of the third housing 230 or closer to 1-2th side portion 212 of the first housing 210.

According to an embodiment, the electronic device 200 includes a support 250 (or member 250, extension 250, protrusion 250 etc.). The support 250 may be coupled to the second housing 220. The support 250 may be coupled to an edge 222 of the second housing 220. The support 250 may include a first support portion 256 coupled to the first conductive portion 223. The first support portion 256 may extend in a direction in which the first conductive portion 223 extends. The support 250 may include a second support portion 257 protruding away from the first conductive portion 223 from the first support portion 256. The second support portion 257 may protrude from the first support portion 256 toward the second conductive portion 231. The support 250 may be disposed between the first conductive portion 223 and the second conductive portion 231.

According to an embodiment, the electronic device 200 includes a display 202 and a second display 206. The display 202 may be referred to as a "first display". At least a portion of the first display 202 and the second display 206 may be folded or unfolded. The first display 202 and the second display 206 may be referred to as "flexible display". In the folded state of the electronic device 200, the second display 206 may be disposed between a housing body (e.g., the housing bodies 216, 226, and 236 of FIG. 6) and a cover (e.g., the covers 217, 227, and 237 of FIG. 6). At least a portion of the second display 206 may be disposed between the second housing body 226 and the second cover 227. At least a portion of the second display 206 may be disposed between the third housing body 236 and the third cover 237.

According to an embodiment, in the folded state (e.g., the second state) of the electronic device 200, the first conductive portion 223 and the second conductive portion 231 are spaced apart from each other. A gap G may be formed between the first conductive portion 223 and the second conductive portion 231. In the folded state of the electronic device 200 according to an embodiment of the disclosure, the first conductive portion 223 and the second conductive portion 231 are spaced apart from each other in the first direction (e.g., the +X or -X direction). The first direction may be a width direction of the electronic device 200. The first direction may be defined as a direction crossing (e.g., orthogonal to) the rotation axis of the hinges 270 and 280. In an example, the first direction is defined as a direction orthogonal to the direction (+Z) (see FIG. 5A) in which the first, second, and third housings 210, 220, and 230 are arranged, among the directions crossing the rotation axes of the hinges 270 and 280.

According to an embodiment, in the folded state of the electronic device 200, the second housing 220 protrudes or extends further than the third housing 230 in the first direction (e.g., the +X direction). The first conductive portion 223 of the second housing 220 may be positioned farther in the first direction (+X) than the second conductive portion 231 of the third housing 230. The first conductive portion 223 may include an inner surface 223a and an outer surface 223b. The second conductive portion 231 may include an end surface 231a. The inner surface 223a of the first conductive portion 223 and the end surface 231a of the second conductive portion 231 may be spaced apart from each other in the first direction (+X). Gap G may be formed between the inner surface 223a of the first conductive portion 223 and the end surface 231a of the second conductive portion 231. The gap G may range from 0.8 mm to 1.2 mm. The gap G may be 0.8 mm or more. However, the numerical range of the gap G is not limited to the above description, and may have various numerical ranges according to embodiments. The support 250 may be disposed between the inner surface 223a of the first conductive portion 223 and the end surface 231a of the second conductive portion 231. The outer surface 223b of the first conductive portion 223 may be positioned farther in the first direction than the outer surface of the second hinge 280. The length of the second housing 220 extending in the first direction (+X) may be larger than the length of the third housing 230 extending in the first direction (+X).

According to an embodiment, a maintaining member 239 (or support member 239, or buttress 239) may be disposed in the second conductive portion 231 of the third housing 230. The maintaining member 239 may be disposed in the second conductive portion 231 of the third housing 230 to maintain the gap between the second hinge 280 and the third housing 230, or to reduce the inflow of foreign matter between the second hinge 280 and the third housing 230.The maintaining member 239 may also be referred to as a "spacer" or a "sweeper".

The electronic device 200 according to an embodiment of the disclosure may secure a sufficient gap G between the antenna 223 and the second conductive portion 231, thereby reducing loss of radio waves transmitted/received by the antenna 223 due to the second conductive portion 231.

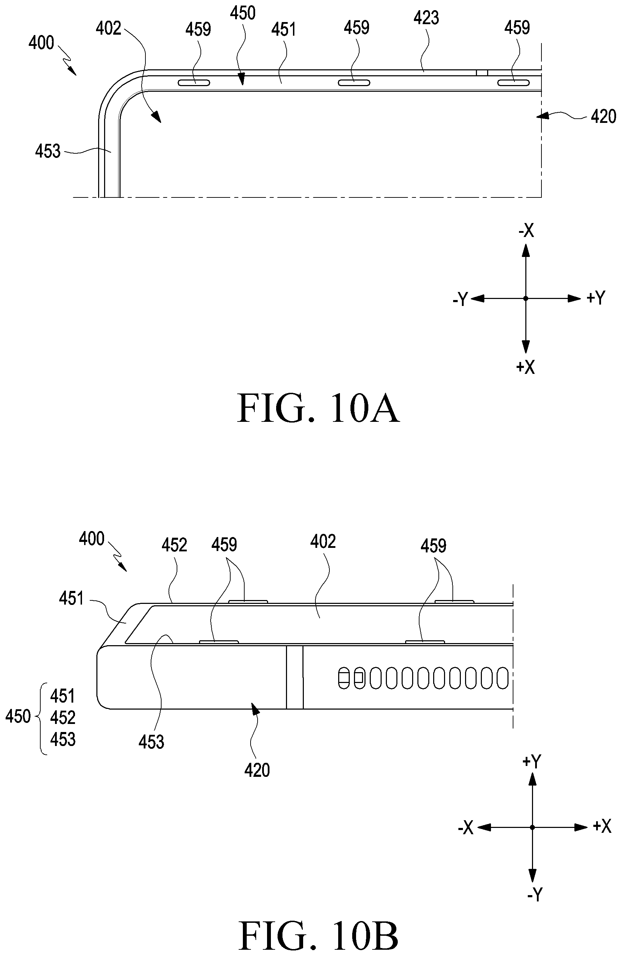

FIG. 9 is a cross-sectional view illustrating an electronic device 300 according to an embodiment of the disclosure, taken along line A-A' of FIG. 5C. The components described with reference to FIG. 9 may be identical in whole or part to the components described with reference to FIGS. 1 to 8. The components described with reference to FIG. 9 may be identical in whole or part to the components described with reference to FIGS. 10A to 18.

According to an embodiment, the electronic device 300 includes a first display 302, a second display 306, a second housing 320, a third housing 330, and a second hinge 380. The description of the components (e.g., the first display 202, the second display 206, the second housing 220, the third housing 230, and the second hinge 280) made with reference to FIG. 8 may be identically applied to the description of the above-described components (e.g., the first display 302, the second display 306, the second housing 320, the third housing 330, and the second hinge 380).

According to an embodiment, the second housing 320 includes a second housing body 326 and a first conductive portion 323. The description of the components (e.g., the second housing body 226 and the first conductive portion 223) made with reference to FIG. 8 may be identically applied to the description of the above-described components (e.g., the second housing body 326 and the first conductive portion 323). For example, the first conductive portion 323 includes an inner surface 323a spaced apart from the second conductive portion 331 of the third housing 330.

According to an embodiment, the third housing 330 includes a third housing body 336, a third cover 337, and a second conductive portion 331. The description of the components (e.g., the third housing body 236, the third cover 237, and the second conductive portion 231) made with reference to FIG. 8 may be identically applied to the description of the above-described components (e.g., the third housing body 336, the third cover 337, and the second conductive portion 331). For example, the second conductive portion 331 includes an end surface 331a spaced apart from the first conductive portion 323.

According to an embodiment, the first conductive portion 323 and the second conductive portion 331 may be spaced apart from each other. A gap G1 may be formed between the first conductive portion 323 and the second conductive portion 331. The inner surface 323a of the first conductive portion 323 and the end surface 331a of the second conductive portion 331 may be spaced apart from each other by the gap G1 (e.g. spaced apart in the X direction).

According to an embodiment, the electronic device 300 includes a support 350. The description of the support (e.g., the support 250) made with reference to FIGS. 1 to 8 may be identically applied to the description of the support 350. The support 350 may include a first support portion 356 and a second support portion 357. The description of the components (e.g., the first support portion 256 and the second support portion 257) made with reference to FIG. 8 may be identically applied to the description of the first support portion 356 and the second support portion 357. The support 350 may include a third support portion 358. The third support portion 358 may extend away from the first conductive portion 323 from the second support portion 357, i.e. the third support portion 358 may extend from the second support portion 357. The third support portion 358 may be integrally formed with the second support portion 357. The third support portion 358 may cover the second conductive portion 331 or a portion thereof. In the folded state of the electronic device 300, the third support portion 358 may be disposed between the first display 302 and the second conductive portion 331. The end surface 331a of the second conductive portion 331 and the end portion 358a of the third support portion 358 may be spaced apart from each other (e.g. in the X direction) by a predetermined gap G2. The third support portion 358 may have an extension length equal to the second gap G2. The third support portion 358 may extend by a predetermined length (e.g., G2) to face the third housing 330. The third support portion 358 may contact the second conductive portion 331 of the third housing 330 or be arranged to contact with the second conductive portion 331. The third support portion 358 may be positioned between the display 302 and the third housing 330 in the folded state of the electronic device 300, and may protect the display 302 from the third housing 330. For example, in the folded state of the electronic device 300, the display 302 maintains a separation distance from the third housing 330 by the third support portion 358. According to an embodiment, the maintaining member 339 is disposed in the second conductive portion 331 of the third housing 330. For example, the maintaining member 339 is disposed in the second conductive portion 331 of the third housing 330 to maintain the gap between the second hinge 380 and the third housing 330, and/or to reduce the inflow of foreign matter between the second hinge 380 and the third housing 330. The maintaining member 339 may also be referred to as a "spacer" or a "sweeper".

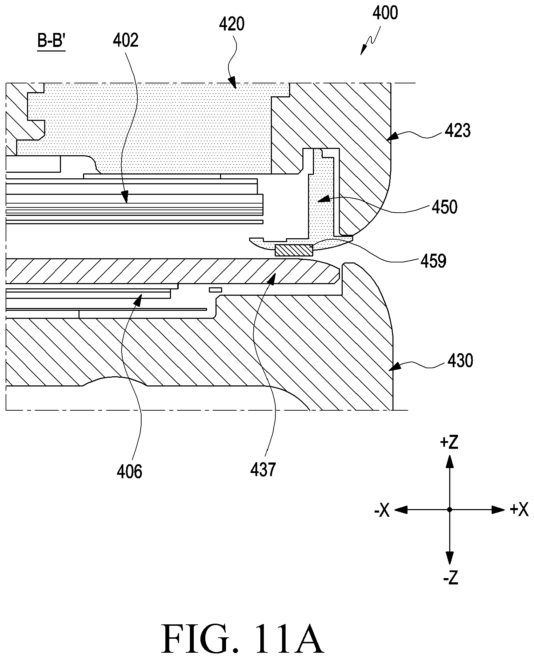

FIG. 10A is an enlarged view of a portion of an electronic device 400 according to an embodiment of the disclosure. FIG. 10B is a view obliquely illustrating a portion of an electronic device 400 according to an embodiment of the disclosure. The components described with reference to FIGS. 10A and 10B may be identical in whole or part to the components described with reference to FIGS. 1 to 9. The components described with reference to FIGS. 10A and 10B may be identical in whole or part to the components described with reference to FIGS. 11A to 18.

According to an embodiment, the electronic device 400 includes a display 402 and a second housing 420. The description of the components (e.g., the display 202 and the second housing 220) made with reference to FIGS. 2 to 8 may be identically applied to the description of the above-described components (e.g., the display 402 and the second housing 420). For example, the second housing 420 includes a first conductive portion 423 disposed at an edge of the second housing 420. The description of the antenna (e.g., the first conductive portion 223) made with reference to FIGS. 2 to 8 may be identically applied to the description of the first conductive portion 423.

According to an embodiment, the electronic device 400 includes a support 450. The description of the support (e.g., the second support 250) made with reference to FIGS. 2 to 8 may be identically applied to the description of the support 450. The support 450 may include a 2-1th support 451, a 2-2th support 452, and a 2-3th support 453. The description of the components (e.g., the 2-1th support 251, the 2-2th support 252, and the 2-3th support 253) made with reference to FIG. 2 may be identically applied to the description of the above-described components (e.g., the 2-1th support 451, the 2-2th support 452, and the 2-3th support 453). The support 450 may include a cushioning member 459. The cushioning member 459 may include a rubber material. The cushioning member 459 may protrude from at least one of the 2-1th support 451, the 2-2th support 452, and the 2-3th support 453.

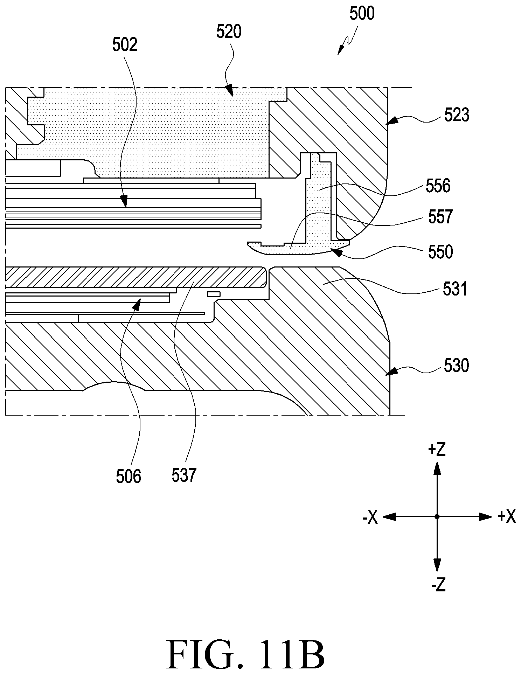

FIG. 11A is a cross-sectional view illustrating an electronic device 400 according to an embodiment of the disclosure, taken along line B-B' of FIG. 5C. The components described with reference to FIG. 11A may be identical in whole or part to the components described with reference to FIGS. 1 to 10B. The components described with reference to FIG. 11A may be identical in whole or part to the components described with reference to FIGS. 11B to 18.

According to an embodiment, the electronic device 400 includes a first display 402, a second display 406, a second housing 420, a third housing 430, and a support 450. The description of the components (e.g., the first display 202, the second display 206, the second housing 220, the third housing 230, and the support 250) made with reference to FIGS. 2 to 8 may be identically applied to the description of the above-described components (e.g., the first display 402, the second display 406, the second housing 420, the third housing 430, and the support 450). For example, the second housing 420 includes a first conductive portion 423 disposed at an edge thereof. For example, the support 450 is coupled to the second housing 420. For example, the third housing 430 includes a third cover 437 facing the support 450. The second display 406 may be arranged on a rear surface of the third housing 430 (i.e. a surface of the third housing 430 opposite to a surface on which a part of the first display 402 is arranged). The third cover 437 may be provided at least partially over the second display 406, for example to provide a degree of protection to the second display 406.

According to an embodiment, in the folded state of the electronic device 400, the support 450 faces the third cover 437. The third cover 437 may include a glass material. The cushioning member 459 may be disposed between the support 450 and the third cover 437. The cushioning member 459 may contact the third cover 437 in the folded state of the electronic device 400.

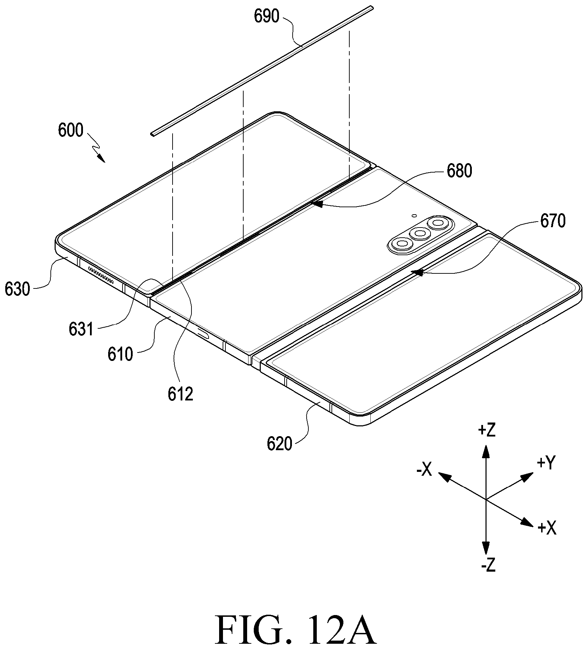

FIG. 11B is a cross-sectional view illustrating an electronic device 500 according to an embodiment of the disclosure, taken along line B-B' of FIG. 5C. The components described with reference to FIG. 11B may be identical in whole or part to the components described with reference to FIGS. 1 to 11A. The components described with reference to FIG. 11B may be identical in whole or part to the components described with reference to FIGS. 12A to 18.

According to an embodiment, the electronic device 500 includes a first display 502, a second display 506, a second housing 520, a third housing 530, and a support 550. The description of the components (e.g., the first display 202, the second display 206, the second housing 220, the third housing 230, and the support 250) made with reference to FIGS. 2 to 8 may be identically applied to the description of the above-described components (e.g., the first display 502, the second display 506, the second housing 520, the third housing 530, and the support 550). For example, the second housing 520 includes a first conductive portion 523 disposed at an edge thereof. For example, the support 550 is coupled to the second housing 520. For example, the third housing 530 includes a third cover 537 that covers the second display 506.

According to an embodiment, the electronic device 500 includes a support 550. The support 550 may include a first support portion 556 coupled to the first conductive portion 523 and a second support portion 557 protruding from the first support portion 556. The second support portion 557 may face the second conductive portion 531 of the third housing 530. In the folded state of the electronic device 500, the second support portion 557 may be spaced apart from the second conductive portion 531. The support 550 may be positioned to be misaligned with the third cover 537. For example, the second support portion 557 is positioned to be misaligned with the third cover 537 in a direction in which the second housing 520 and the third housing 530 are arranged (e.g. the Z direction) For example, the support 550 of second support portion 557 thereof is positioned so as not to be aligned with (e.g. to be offset from) the third cover 537 in the direction (e.g. Z direction) in which the second cover 520 and the third cover 530 are stacked. In the folded state of the electronic device 500, the support 550 may not contact the third cover 537. However, in the folded state of the electronic device 500, the support 550 may contact the surface of the third cover 537. In the folded state of the electronic device 500, at least a portion of the second support portion 557 of the support 550 may be positioned between the second housing 520 and the third housing 530.

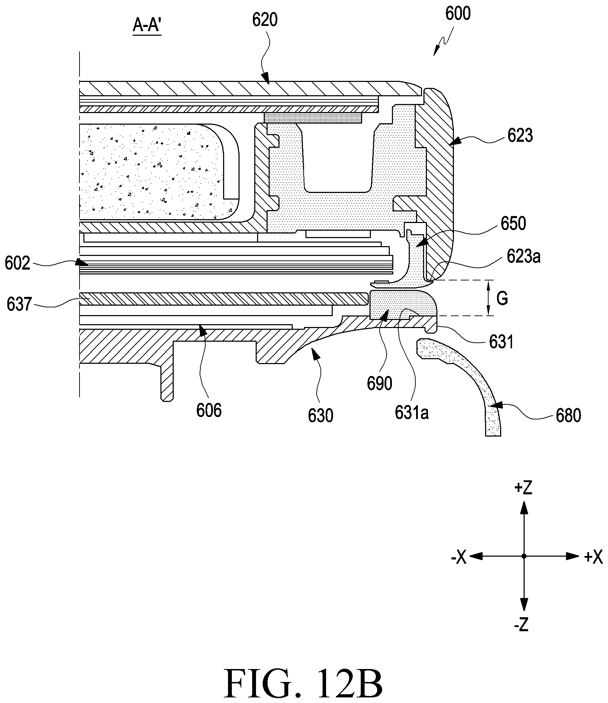

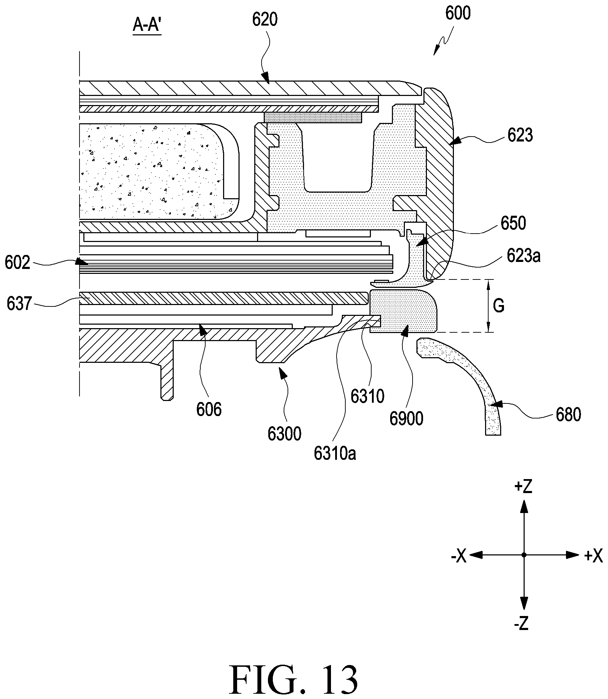

FIG. 12A is a view obliquely illustrating an unfolded state of an electronic device 600 according to an embodiment of the disclosure. FIG. 12A is an exploded view illustrating some components (e.g., the non-conductive member 690) of the electronic device 600. It is a portion of the cross-sectional view of the electronic device 600 according to an embodiment of the disclosure, taken along line A-A' of FIG. 5C. The components described with reference to FIGS. 12A and 12B may be identical in whole or part to the components described with reference to FIGS. 1 to 11B. The components described with reference to FIGS. 12A and 12B may be identical in whole or part to the components described with reference to FIGS. 13 to 18.

According to an embodiment, the electronic device 600 includes a first housing 610, a second housing 620, a third housing 630, a first hinge 670, and a second hinge 680. The description of the components (e.g., the first housing 210, the second housing 220, the third housing 630, the first hinge 270, and the second hinge 280) made with reference to FIGS. 2 to 8 may be identically applied to the description of the above-described components (e.g., the first housing 610, the second housing 620, the third housing 630, the first hinge 670, and the second hinge 680). For example, the first hinge 670 rotatably connects the second side portion 612 of the first housing 610 and the 3-1th side portion 631 of the third housing 630.

According to an embodiment, the electronic device 600 includes a non-conductive member 690. The non-conductive member 690 may be coupled to the second conductive portion 631 of the third housing 630.

According to an embodiment, the electronic device 600 includes a first display 602, a second display 606, a first conductive portion 623, a second conductive portion 631, a support 650, and a third cover 637. The description of the components (e.g., the first display 202, the second display 206, the inner surface 223a, the first conductive portion 223, the end surface 231a, the second conductive portion 231, the support 250, and the third cover 237) made with reference to FIGS. 2 to 8 may be identically applied to the description of the above-described components (e.g., the first display 602, the second display 606, the first conductive portion 623, the second conductive portion 631, the support 650, and the third cover 637).

According to an embodiment, the non-conductive member 690 is coupled to (e.g. attached, connected, joined etc.) the second conductive portion 631 of the third housing 630. In the folded state of the electronic device 600, the non-conductive member 690 may be disposed between the first conductive portion 623 and the second conductive portion 631. In the folded state of the electronic device 600, the non-conductive member 690 may face the support 650. The non-conductive member 690 may support the third cover 637. In an example, the non-conductive member 690 is formed or provided in the electronics device 600 such that, in the folded state of the electronic device 600, the non-conductive member 690 is disposed between the first conductive portion 623 (or, more generally, the corresponding antenna) and the second hinge 680 (or, more specifically, the second conductive portion 631), where the non-conductive member 690 may be provided along the length of the second hinge 680 (e.g. in the Y direction).

According to an embodiment, the lower end surface 623a of the first conductive portion 623 and the end surface 631a of the second conductive portion 631 are spaced apart from each other. A gap G may be formed between the lower end surface 623a of the first conductive portion 623 and the end surface 631a of the second conductive portion 631. The non-conductive member 690 may be disposed between the lower end surface 623a of the first conductive portion 623 and the end surface 631a of the second conductive portion 631. In an example, the non-conductive member 690 is disposed at least partially, or entirely, in the gap G. The first conductive portion 623 and the second conductive portion 631 may be spaced apart from each other in the second direction (e.g., the +Z direction). The second direction may be defined as a direction in which the second housing 620 and the third housing 630 are arranged. The second direction may be a thickness direction of the electronic device 600.

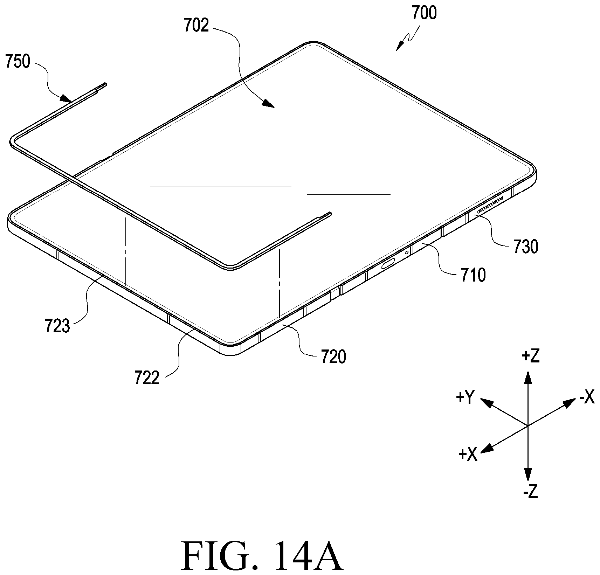

FIG. 13 is a cross-sectional view of the electronic device 600 illustrated in FIG. 12B according to an embodiment of the disclosure. The components described with reference to FIG. 13 may be identical in whole or part to the components described with reference to FIGS. 1 to 12B. The components described with reference to FIG. 13 may be identical in whole or part to the components described with reference to FIGS. 14A to 18.

According to an embodiment, the electronic device 600 includes a first display 602, a second display 606, a second housing 620, a first conductive portion 623, a third cover 637, a support 650, and a second hinge 680.

According to an embodiment, the electronic device 600 includes a third housing 6300, a second conductive portion 6310, and a non-conductive member 6900. The second conductive portion 6310 may be a portion of the third housing 6300 and may include an end surface 6310a. The non-conductive member 6900 may be coupled to the second conductive portion 6310. The non-conductive member 6900 may be coupled to the end surface 6310a. In the folded state of the electronic device 600, the lower end surface 623a of the first conductive portion 623 may be spaced apart from the second hinge 680. A gap G may be formed between the lower end surface 623a of the first conductive portion 623 and the second hinge 680. The first conductive portion 623 and the second conductive portion 6310 may be spaced apart from each other. The non-conductive member 6900 may be disposed between the first conductive portion 623 and the second conductive portion 6310 in the folded state of the electronic device 600. The non-conductive member 6900 may be integrally formed with the second conductive portion 6310. The non-conductive member 6900 may be a portion of the third housing 6300. The entire third housing 6300 may include a non-conductive material. The entire third housing 6300 may be formed of a non-conductive material, and the third housing 6300 may be the same as the non-conductive member 6900.

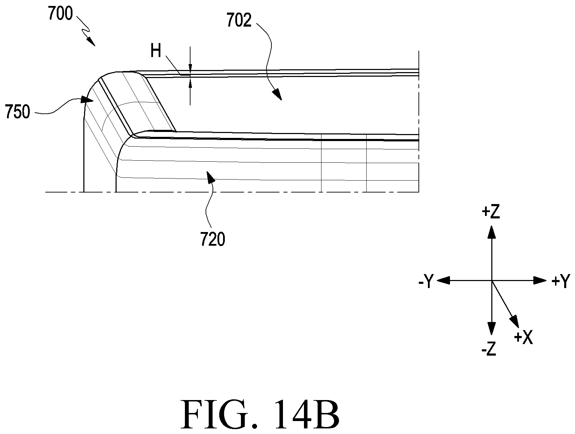

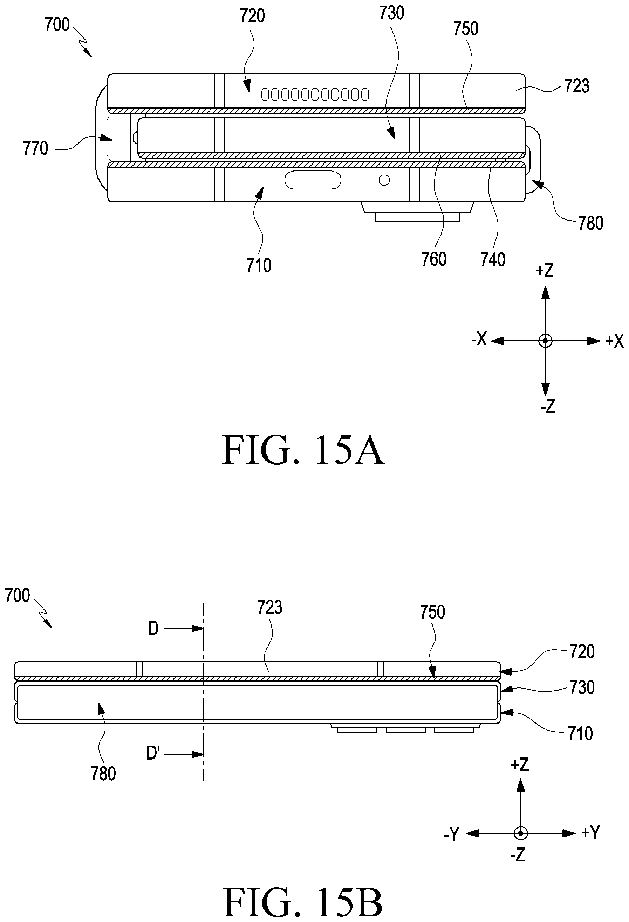

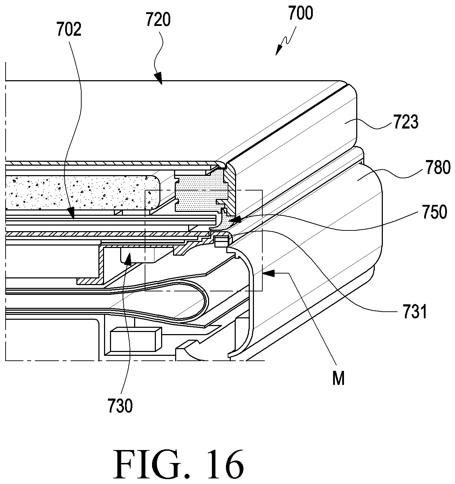

FIG. 14A is a view illustrating an unfolded state of an electronic device 700 according to an embodiment of the disclosure. FIG. 14A is an exploded view illustrating some components (e.g., the support 750) of the electronic device 700. FIG. 14B is an enlarged view of a portion of the electronic device 700. FIG. 15A is a view illustrating a folded state of an electronic device 700 according to an embodiment as viewed in one direction (e.g., the +Y direction of FIG. 14A). FIG. 15B is a view illustrating a folded state of an electronic device 700 according to an embodiment as viewed in one direction (e.g., the -X direction of FIG. 14A). The components described with reference to FIGS. 14A to 15B may be identical in whole or part to the components described with reference to FIGS. 1 to 13. The components described with reference to FIGS. 14A and 15B may be identical in whole or part to the components described with reference to FIGS. 16 to 18.

According to an embodiment, the electronic device 700 includes a display 702, a first housing 710, a second housing 720, a third housing 730, an edge 722, and a first conductive portion 723. The description of the components (e.g., the display 202, the first housing 210, the second housing 220, the third housing 230, the edge 222, and the first conductive portion 223) made with reference to FIGS. 2 to 8 may be identically applied to the description of the above-described components (e.g., the display 702, the first housing 710, the second housing 720, the third housing 730, the edge 722, and the first conductive portion 723).

According to an embodiment, the electronic device 700 includes a support 750 (or raised portion 750, or rim 750, or flange 750). The support 750 may be coupled to the second housing 720. The support 750 may extend along the circumference of the second housing 720. At least a portion of the support 750 may be disposed between the edge 722 and the display 702. The support 750 may be coupled to the first conductive portion 723.

According to an embodiment, the support 750 protrudes from the surface of the display 702 in the second direction (e.g., the +Z direction). The support 750 may protrude from the surface of the display 702 by a predetermined distance H in the second direction.

According to an embodiment, the electronic device 700 includes a first hinge 770 and a second hinge 780. The description of the hinges (e.g., the first hinge 270 and the second hinge 280) made with reference to FIGS. 2 to 8 may be identically applied to the description of the first and second hinges 770 and 780.

According to an embodiment, the electronic device 700 includes a first support 740, a second support 750, and a third support 760. Each of the first, second, and third supports 740, 750, and 760 may be referred to as a "support" (or, as above, as a raised portion, rim or flange). The first support 740 may be disposed between the first housing 710 and the third housing 730 in the folded state of the electronic device 700 (e.g. in a G-type fold as shown in FIG. 15A). The second support 750 may be disposed between the second housing 720 and the third housing 730 in the folded state of the electronic device 700. The third support 760 may be disposed between the first housing 710 and the third housing 730 in the folded state of the electronic device 700. Each of the first, second, and third supports 740, 750, and 760 may protrude from the surface of the display 702 in the second direction (e.g., the +Z direction).

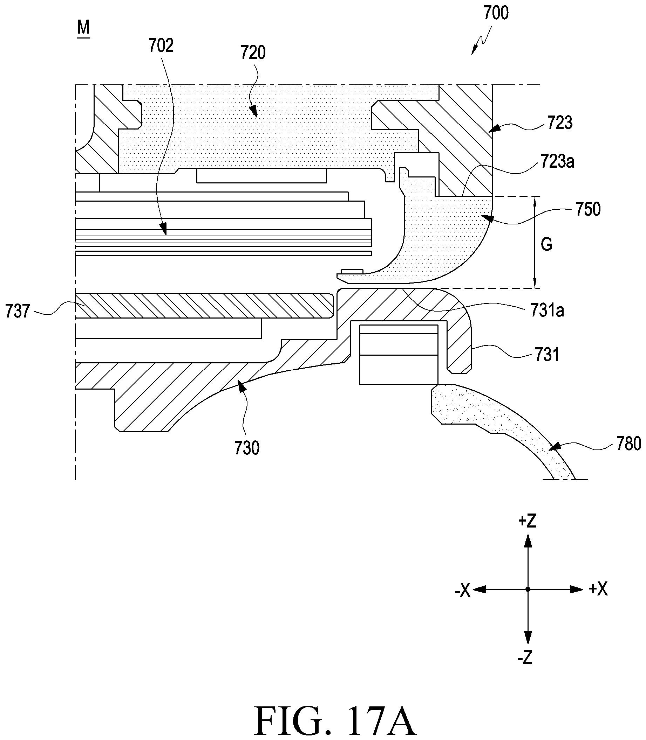

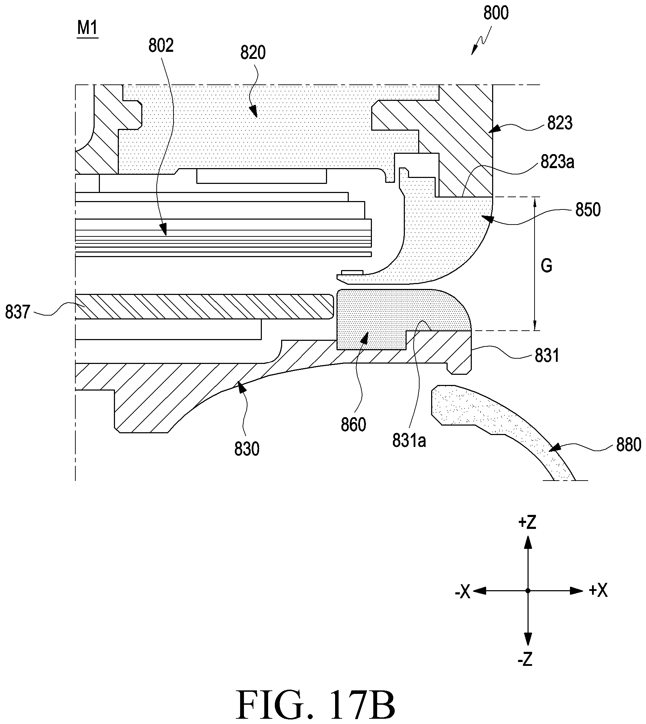

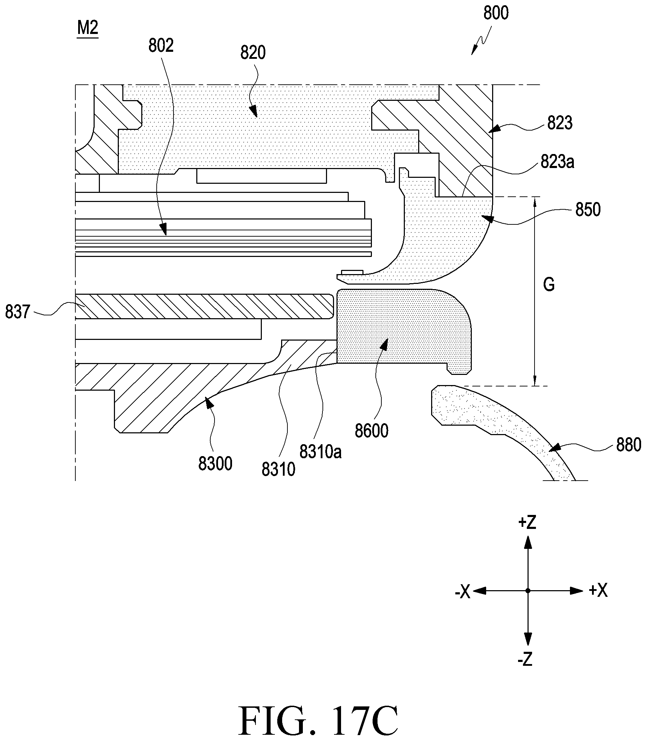

FIG. 16 is a view obliquely illustrating a portion of the electronic device 700, taken along line D-D' of FIG. 15B. FIG. 17A is an enlarged cross-sectional view of area M illustrated in FIG. 16. FIG. 17B is an enlarged cross-sectional view of area M1 area corresponding to area M in the electronic device 800 according to an embodiment of the disclosure. FIG. 17C is an enlarged cross-sectional view of area M2 corresponding to area M in the electronic device 800 according to an embodiment of the disclosure. The components described with reference to FIGS. 16 to 17C may be identical in whole or part to the components described with reference to FIGS. 1 to 15B.

According to an embodiment, in the folded state of the electronic device 700, the support 750 protrudes or extends from the first conductive portion 723 toward the second conductive portion 731. The support 750 may include a non-conductive material. The support 750 may include a rubber material, a plastic material, a glass material, and/or a ceramic material. In another example, the support 750 includes or is formed of an insulating material. The support 750 may contact the second conductive portion 731 in the folded state of the electronic device 700.

According to the embodiment of FIG. 17A, in the folded state of the electronic device 700, the support 750 is disposed between the first conductive portion 723 and the second conductive portion 731. The support 750 may protrude from the first conductive portion 723 toward the second conductive portion 731. In the folded state of the electronic device 700, the support 750 may be positioned to be misaligned with (e.g. offset from) the third cover 737 in the second direction (e.g., the +Z direction). The lower end surface 723a of the first conductive portion 723 and the upper end surface 731a of the second conductive portion 731 may be spaced apart from each other. A gap G may be formed between the lower end surface 723a of the first conductive portion 723 and the upper end surface 731a of the second conductive portion 731. The support 750 may be disposed within the gap G between the lower end surface 723a of the first conductive portion 723 and the upper end surface 731a of the second conductive portion 731.

According to the embodiment of FIG. 17B, the electronic device 800 includes a display 802, a second housing 820, a first conductive portion 823, a third housing 830, a third cover 837, and a second hinge 880. The description of the components (e.g., the display 202, the second housing 220, the first conductive part 223, the third housing 230, the third cover 237, and the second hinge 280) made with reference to FIGS. 2 to 8 may be identically applied to the description of the above-described components (e.g., the display 802, the second housing 820, the first conductive part 823, the third housing 830, the third cover 837, and the second hinge 880). The electronic device 800 may include a support 850 coupled to the first conductive portion 823. **In** the folded state of the electronic device 800, the support 850 may protrude from the lower end surface 823a of the first conductive portion 823 toward the third housing 830. The electronic device 800 may include a non-conductive member 860 coupled to the second conductive portion 831 of the third housing 830. **In** the folded state of the electronic device 800, the non-conductive member 860 may protrude from the upper end surface 831a of the second conductive portion 831 toward the first conductive portion 823. **In** the folded state of the electronic device 800, the first conductive portion 823 and the second conductive portion 831 may be spaced apart from each other. A gap G may be formed between the lower end surface 823a of the first conductive portion 823 and the upper end surface 831a of the second conductive portion 831. The support 850 may be disposed within the gap G. The non-conductive member 860 may be disposed within the gap G.

According to the embodiment of FIG. 17C, the electronic device 800 includes a third housing 8300 including a second conductive portion 8310. The electronic device 800 may include a non-conductive member 8600 coupled to the second conductive portion 8310. The non-conductive member 8600 may be coupled to the end surface 8310a of the second conductive portion 8310. A gap G may be formed between the lower end surface 823a of the first conductive portion 823 and the second hinge 880. The first conductive portion 823 and the second conductive portion 8310 may be spaced apart from each other. The support 850 and the non-conductive member 8600 may be disposed between the first conductive portion 823 and the second conductive portion 8310. The non-conductive member 8600 may be a portion of the third housing 8300. The non-conductive member 8600 may be integrally formed with the second conductive portion 8310.

According to various embodiments of the disclosure, a gap G is formed between the first conductive portion (e.g., the first conductive portion 223, 323, 423, 523, 623, 723, or 823 of FIGS. 1 to 17C) and the second conductive portion (e.g., the second conductive portion 231, 331, 431, 531, 631, 6310, 731, 831, or 8310 of FIGS. 1 to 17C). The gap G may be defined as a space formed between the first conductive portion 223, 323, 423, 523, 623, 723, or 823 and the second conductive portion 231, 331, 431, 531, 631, 6310, 731, 831, or 8310 illustrated in FIGS. 1 to 17C. The gap G may be defined as a distance at which the first conductive portion 223, 323, 423, 523, 623, 723, or 823 and the second conductive portion 231, 331, 431, 531, 631, 6310, 731, 831, or 8310 are physically spaced apart from each other.

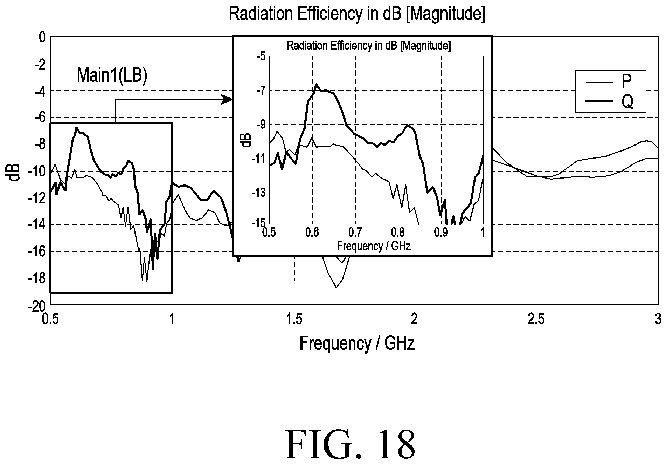

FIG. 18 is a graph comparing antenna performance of an electronic device according to various embodiments of the disclosure with antenna performance according to a comparative example. The components described with reference to FIG. 18 may be identical in whole or part to the components described with reference to FIGS. 1 to 17C.

Referring to FIG. 18, line P is a graph illustrating the antenna performance according to a comparative example (e.g. an example in which the teachings of the present disclosure are not provided). Line Q is a graph illustrating the antenna performance of an electronic device (e.g., the electronic device 200 shown in FIGS. 2 to 8) according to an embodiment of the disclosure. Comparison between lines P and Q reveals that the radiation efficiency of the antenna according to an embodiment of the disclosure is higher than the radiation efficiency of the antenna according to the comparative embodiment. An electronic device according to an embodiment of the disclosure may secure a sufficient separation distance between an antenna (e.g., the antenna 223 of FIG. 8) and a metal member (e.g., the second conductive portion 231 of FIG. 8) in the folded state of the electronic device, thereby reducing a loss of radio waves transmitted/received by the antenna.

The electronic device may include a flexible display that is partially folded or unfolded, e.g. the flexible display is partially foldable or unfoldable. An electronic device including a flexible display includes a plurality of housings rotatably coupled to each other. An antenna for exchanging signals with the outside of the electronic device is disposed on a side surface portion of the plurality of housings. In a state in which the housing is folded and the edges of two adjacent housings face each other, when the antenna disposed in any one housing is positioned closely to the metal member disposed in another adjacent housing, a loss occurs in radio waves transmitted and received.

An object of the disclosure may be to reduce the loss of radio waves transmitted/received by the antenna.

An object of various examples of the disclosure is to secure a separation distance between the antenna and the metal member.

The disclosure is not limited to the foregoing embodiments but various modifications or changes may rather be made thereto without departing from the spirit and scope of the disclosure.

The electronic device according to various embodiments of the disclosure may reduce radio wave interference between the antenna and the conductive portion by spacing the antenna of the second housing and the conductive portion of the third housing apart from each other.

The electronic device according to various embodiments of the disclosure may secure a separation distance between the antenna and the conductive portion by adjusting the length or width of the housing and/or disposing a non-conductive member between the antenna and the conductive portion.

Effects of the disclosure are not limited to the foregoing, and other unmentioned effects would be apparent to one of ordinary skill in the art from the following description.

An electronic device (e.g., 101; 200; 300; 400; 500; 600; 700; 800 of FIGS. 1 to 18) according to an embodiment of the disclosure may include a first housing (e.g., 210 of FIGS. 1 to 18) including a first side portion (e.g., 211 of FIGS. 1 to 18) and a second side portion (e.g., 212 of FIGS. 1 to 18) opposite to the first side portion (e.g., 211 of FIGS. 1 to 18).

An electronic device (e.g., 101; 200; 300; 400; 500; 600; 700; 800 of FIGS. 1 to 18) according to an embodiment of the disclosure may include a second housing (e.g., 220 of FIGS. 1 to 18) rotatably connected to the first side portion (e.g., 211 of FIGS. 1 to 18) and including an edge (e.g., 222 of FIGS. 1 to 18) and a first conductive portion (e.g., 223 of FIGS. 1 to 18) disposed at the edge (e.g., 222 of FIGS. 1 to 18).

An electronic device (e.g., 101; 200; 300; 400; 500; 600; 700; 800 of FIGS. 1 to 18) according to an embodiment of the disclosure may include a third housing (e.g., 230 of FIGS. 1 to 18) rotatably connected to the second side portion (e.g., 212 of FIGS. 1 to 18) and including a second conductive portion (e.g., 231 of FIGS. 1 to 18) including a metal material.

An electronic device (e.g., 101; 200; 300; 400; 500; 600; 700; 800 of FIGS. 1 to 18) according to an embodiment of the disclosure may include a flexible display (e.g., 202 of FIGS. 1 to 18) including a first area (e.g., 202a of FIGS. 1 to 18) corresponding to the first housing (e.g., 210 of FIGS. 1 to 18), a second area (e.g., 202b of FIGS. 1 to 18) corresponding to the second housing (e.g., 220 of FIGS. 1 to 18), and a third area (e.g., 202c of FIGS. 1 to 18) corresponding to the third housing (e.g., 230 of FIGS. 1 to 18).

An electronic device (e.g., 101; 200; 300; 400; 500; 600; 700; 800 of FIGS. 1 to 18) according to an embodiment of the disclosure may operate in a first state in which the first housing (e.g., 210 of FIGS. 1 to 18), the second housing (e.g., 220 of FIGS. 1 to 18), and the third housing (e.g., 230 of FIGS. 1 to 18) are unfolded or operate in a second state in which the second housing (e.g., 220 of FIGS. 1 to 18) and the third housing (e.g., 230 of FIGS. 1 to 18) are folded toward the first area (e.g., 202a of FIGS. 1 to 18).

In the second state according to an embodiment of the disclosure, the edge (e.g., 222 of FIGS. 1 to 18) of the second housing (e.g., 220 of FIGS. 1 to 18) and the second conductive portion (e.g., 231 of FIGS. 1 to 18) may overlap each other in a direction in which the first, second, and third housings (e.g., 210, 220, and 230 of FIGS. 1 to 18) are arranged, and the first conductive portion (e.g., 223 of FIGS. 1 to 18) and the second conductive portion (e.g., 231 of FIGS. 1 to 18) may be spaced apart from each other.

An electronic device (e.g., 101; 200; 300; 400; 500; 600; 700; 800 of FIGS. 1 to 18) according to an embodiment of the disclosure may operate in a first state in which the second housing (e.g., 220 of FIGS. 1 to 18) and the third housing (e.g., 230 of FIGS. 1 to 18) are unfolded with respect to the first housing (e.g., 210 of FIGS. 1 to 18), or operate in a second state in which the second housing (e.g., 220 of FIGS. 1 to 18) and the third housing (e.g., 230 of FIGS. 1 to 18) are folded with respect to the first housing (e.g., 210 of FIGS. 1 to 18).

The edge (e.g., 222 of FIGS. 1 to 18) of the second housing (e.g., 220 of FIGS. 1 to 18) according to an embodiment of the disclosure may be disposed at a position opposite to the first side portion (e.g., 211 of FIGS. 1 to 18) with respect to the second area (e.g., 202b of FIGS. 1 to 18).

The first conductive portion (e.g., 223 of FIGS. 1 to 18) according to an embodiment of the disclosure may be disposed to form a side surface of the electronic device (e.g., 200 of FIGS. 1 to 18) at the edge (e.g., 222 of FIGS. 1 to 18).

The edge (e.g., 222 of FIGS. 1 to 18) of the second housing (e.g., 220 of FIGS. 1 to 18) according to an embodiment of the disclosure may protrude from a position where an end surface (e.g., 231a of FIGS. 1 to 18) of the second conductive portion (e.g., 231 of FIGS. 1 to 18) is formed in the second state in a direction crossing a direction in which the first, second, and third housings (e.g., 210, 220, and 230 of FIGS. 1 to 18) are arranged.

The first conductive portion (e.g., 223 of FIGS. 1 to 18) according to an embodiment of the disclosure may be positioned farther than the second conductive portion (e.g., 231 of FIGS. 1 to 18) in a direction crossing a direction in which the first, second, and third housings (e.g., 210, 220, and 230 of FIGS. 1 to 18) are arranged, in the second state.

The first conductive portion (e.g., 223 of FIGS. 1 to 18) according to an embodiment of the disclosure may be spaced apart from the second conductive portion (e.g., 231 of FIGS. 1 to 18) in a direction in which the first, second, and third housings (e.g., 210, 220, and 230 of FIGS. 1 to 18) are arranged, in the second state.

An electronic device (e.g., 101; 200; 300; 400; 500; 600; 700; 800 of FIGS. 1 to 18) according to an embodiment of the disclosure may include a support 250 disposed between the first conductive portion (e.g., 223 of FIGS. 1 to 18) and the second conductive portion (e.g., 231 of FIGS. 1 to 18).

A support (e.g., 350 of FIGS. 1 to 18) according to an embodiment of the disclosure may include a first support portion (e.g., 356 of FIGS. 1 to 18) coupled to the first conductive portion (e.g., 323 of FIGS. 1 to 18).

A support (e.g., 350 of FIGS. 1 to 18) according to an embodiment of the disclosure may include a second support portion (e.g., 357 of FIGS. 1 to 18) protruding from the first support portion (e.g., 356 of FIGS. 1 to 18).

A support (e.g., 350 of FIGS. 1 to 18) according to an embodiment of the disclosure may include a third support portion (e.g., 358 of FIGS. 1 to 18) extending from the second support portion (e.g., 357 of FIGS. 1 to 18) to cover the second conductive portion (e.g., 331 of FIGS. 1 to 18).

An electronic device (e.g., 101; 200; 300; 400; 500; 600; 700; 800 of FIGS. 1 to 18) according to an embodiment of the disclosure may include a second display (e.g., 406 of FIGS. 1 to 18) at least partially folded or unfolded.

An electronic device (e.g., 101; 200; 300; 400; 500; 600; 700; 800 of FIGS. 1 to 18) according to an embodiment of the disclosure may include a third cover (e.g., 437 of FIGS. 1 to 18) coupled to the third housing (e.g., 430 of FIGS. 1 to 18) and covering at least a portion of the second display (e.g., 406 of FIGS. 1 to 18).

An electronic device (e.g., 101; 200; 300; 400; 500; 600; 700; 800 of FIGS. 1 to 18) according to an embodiment of the disclosure may include a cushioning member (e.g., 459 of FIGS. 1 to 18) disposed between the support (e.g., 450 of FIGS. 1 to 18) and the third cover (e.g., 437 of FIGS. 1 to 18).

An electronic device (e.g., 101; 200; 300; 400; 500; 600; 700; 800 of FIGS. 1 to 18) according to an embodiment of the disclosure may further include a non-conductive member (e.g., 690; 6900 of FIGS. 1 to 18) coupled to the second conductive portion (e.g., 631; 6310 of FIGS. 1 to 18) and disposed between the first conductive portion (e.g., 623 of FIGS. 1 to 18) and the second conductive portion (e.g., 631; 6310 of FIGS. 1 to 18).

The non-conductive member (e.g., 6900 of FIGS. 1 to 18) according to an embodiment of the disclosure may be integrally formed with the second conductive portion (e.g., 6310 of FIGS. 1 to 18).

An electronic device (e.g., 101; 200; 300; 400; 500; 600; 700; 800 of FIGS. 1 to 18) according to an embodiment of the disclosure may include a support (e.g., 750; 850 of FIGS. 1 to 18) coupled to the first conductive portion (e.g., 723; 823 of FIGS. 1 to 18) and protruding from a lower end surface (e.g., 723a; 823a of FIGS. 1 to 18) of the first conductive portion (e.g., 723; 823 of FIGS. 1 to 18) toward the second conductive portion (e.g., 731; 831 of FIGS. 1 to 18).

An electronic device (e.g., 101; 200; 300; 400; 500; 600; 700; 800 of FIGS. 1 to 18) according to an embodiment of the disclosure may include a non-conductive member (e.g., 860; 8600 of FIGS. 1 to 18) coupled to the second conductive portion (e.g., 831; 8310 of FIGS. 1 to 18) and protruding from an upper end surface (e.g., 831a; 8310a of FIGS. 1 to 18) of the second conductive portion (e.g., 831; 8310 of FIGS. 1 to 18) toward the support (e.g., 850 of FIGS. 1 to 18).

The non-conductive member (e.g., 8600 of FIGS. 1 to 18) according to an embodiment of the disclosure may be integrally formed with the second conductive portion (e.g., 8310 of FIGS. 1 to 18).

In the second state according to an embodiment of the disclosure, the third housing (e.g., 230 of FIGS. 1 to 18) may be positioned between the first housing (e.g., 210 of FIGS. 1 to 18) and the second housing (e.g., 220 of FIGS. 1 to 18).

An electronic device (e.g., 101; 200; 300; 400; 500; 600; 700; 800 of FIGS. 1 to 18) according to an embodiment of the disclosure may include a first hinge (e.g., 270 of FIGS. 1 to 18) rotatably connecting the first housing (e.g., 210 of FIGS. 1 to 18) and the second housing (e.g., 220 of FIGS. 1 to 18).

An electronic device (e.g., 101; 200; 300; 400; 500; 600; 700; 800 of FIGS. 1 to 18) according to an embodiment of the disclosure may include a second hinge (e.g., 280 of FIGS. 1 to 18) rotatably connecting the first housing (e.g., 210 of FIGS. 1 to 18) and the third housing (e.g., 230 of FIGS. 1 to 18).

An electronic device (e.g., 101; 200; 300; 400; 500; 600; 700; 800 of FIGS. 1 to 18) according to an embodiment of the disclosure may include a flexible display (e.g., 202 of FIGS. 1 to 18) at least partially folded or unfolded.

An electronic device (e.g., 101; 200; 300; 400; 500; 600; 700; 800 of FIGS. 1 to 18) according to an embodiment of the disclosure may include a housing (e.g., 201 of FIGS. 1 to 18) including a first housing (e.g., 210 of FIGS. 1 to 18), a second housing (e.g., 220 of FIGS. 1 to 18), and a third housing (e.g., 230 of FIGS. 1 to 18) disposed to overlap each other in a state in which the flexible display (e.g., 202 of FIGS. 1 to 18) is folded.

An electronic device (e.g., 101; 200; 300; 400; 500; 600; 700; 800 of FIGS. 1 to 18) according to an embodiment of the disclosure may include a first conductive portion (e.g., 223 of FIGS. 1 to 18) forming a side surface of the electronic device (e.g., 101; 200; 300; 400; 500; 600; 700; 800 of FIGS. 1 to 18) and disposed at an edge (e.g., 222 of FIGS. 1 to 18) of the second housing (e.g., 220 of FIGS. 1 to 18).

An electronic device (e.g., 101; 200; 300; 400; 500; 600; 700; 800 of FIGS. 1 to 18) according to an embodiment of the disclosure may include a second conductive portion (e.g., 231 of FIGS. 1 to 18) providing a portion of the third housing (e.g., 230 of FIGS. 1 to 18) rotatably connected to the first housing (e.g., 210 of FIGS. 1 to 18) and spaced apart from the first conductive portion (e.g., 223 of FIGS. 1 to 18) in a state in which the flexible display (e.g., 202 of FIGS. 1 to 18) is folded.

An electronic device (e.g., 101; 200; 300; 400; 500; 600; 700; 800 of FIGS. 1 to 18) according to an embodiment of the disclosure may include a first housing (e.g., 210 of FIGS. 1 to 18).

An electronic device (e.g., 101; 200; 300; 400; 500; 600; 700; 800 of FIGS. 1 to 18) according to an embodiment of the disclosure may include a second housing (e.g., 220 of FIGS. 1 to 18) rotatably connected to one side of the first housing (e.g., 210 of FIGS. 1 to 18) and including a first conductive portion (e.g., 223 of FIGS. 1 to 18).

An electronic device (e.g., 101; 200; 300; 400; 500; 600; 700; 800 of FIGS. 1 to 18) according to an embodiment of the disclosure may include a third housing (e.g., 230 of FIGS. 1 to 18) rotatably connected to another side of the first housing (e.g., 210 of FIGS. 1 to 18).

An electronic device (e.g., 101; 200; 300; 400; 500; 600; 700; 800 of FIGS. 1 to 18) according to an embodiment of the disclosure may include a first hinge member (e.g., 270 of FIGS. 1 to 18) disposed between the first housing (e.g., 210 of FIGS. 1 to 18) and the second housing (e.g., 220 of FIGS. 1 to 18).

An electronic device (e.g., 101; 200; 300; 400; 500; 600; 700; 800 of FIGS. 1 to 18) according to an embodiment of the disclosure may include a second hinge member (e.g., 280 of FIGS. 1 to 18) disposed between the first housing (e.g., 210 of FIGS. 1 to 18) and the third housing (e.g., 230 of FIGS. 1 to 18).

An electronic device (e.g., 101; 200; 300; 400; 500; 600; 700; 800 of FIGS. 1 to 18) according to an embodiment of the disclosure may include a flexible display (e.g., 202 of FIGS. 1 to 18) disposed on front surfaces of the first housing (e.g., 210 of FIGS. 1 to 18), the second housing (e.g., 220 of FIGS. 1 to 18), and the third housing (e.g., 230 of FIGS. 1 to 18) and configured to be at least partially folded or unfolded.

In a state in which each of the second housing (e.g., 220 of FIGS. 1 to 18) and the third housing (e.g., 230 of FIGS. 1 to 18) is folded toward the flexible display (e.g., 202 of FIGS. 1 to 18) disposed in the first housing (e.g., 210 of FIGS. 1 to 18), the first conductive portion (e.g., 223 of FIGS. 1 to 18) of the second housing (e.g., 220 of FIGS. 1 to 18) and the side portion (e.g., 231 of FIGS. 1 to 18) of the third housing (e.g., 230 of FIGS. 1 to 18) may be disposed to be spaced apart from each other.

It will also be appreciated that the present disclosure includes subject matter in accordance with the following numbered examples:

According to a first example, there is provided an electronic device comprising: a first housing; a second housing rotatably connected, at a first side portion to a first side of the first housing and including an antenna comprising a first conductive portion, the first conductive portion being located at a second side portion of the second housing on an opposite side to the first side portion of the second housing; a third housing rotatably connected, at a side portion, to a second side of the first housing, opposite to the first side of the first housing portion; and a flexible display disposed on front surfaces of the first, second, and third housings, wherein, in a folded state of the electronic device in which the first housing, the second housing and the third housing are arranged in a stack: a second conductive portion included in the side portion of the third housing at least partially faces towards the second housing, and the first conductive portion of the second housing and the second conductive portion of the side portion of the third housing are spaced apart from each other.

According to a second example, there is provided the electronic device of the first example, wherein the second side portion comprises an edge of the second housing forming a side surface of the electronic device, and the first conductive portion is disposed at the edge.

According to a third example, there is provided the electronic device of the second example, wherein, in the folded state, the edge of the second housing protrudes, in a first direction opposite a second direction of the first side portion from the second side portion, over and away from a position of an end surface of the second conductive portion.

According to a fourth example, there is provided the electronic device of the third example, wherein, in the folded state, the first conductive portion is spaced apart from the second conductive portion in the first direction.

According to a fifth example, there is provided the electronic device of any of the first to fourth examples, wherein, in the folded state, the first conductive portion is spaced apart from the second conductive portion in a third direction in which the first, second, and third housings are arranged.

According to a sixth example, there is provided the electronic device of any of the first to fifth examples, further comprising a support configured to be disposed between the first conductive portion and the second conductive portion when the electronic device is in the folded state.

According to a seventh example, there is provided the electronic device of the sixth example, the support includes: a first supporting portion coupled to the first conductive portion; a second supporting portion protruding from the first supporting portion; and a third supporting portion extending from the second supporting portion to be arranged adjacent to the second conductive portion when the electronic device is in the folded state.

According to an eighth example, there is provided the electronic device of the sixth or seventh example, further comprising: a second display arranged at least partially on a rear surface of the third housing; a third cover coupled to the third housing and covering at least a portion of the second display; and a cushioning member arranged to be disposed between the support and the third cover when the electronic device is in the folded state.

According to a ninth example, there is provided the electronic device of any of the first to eighth examples, further comprising a non-conductive member coupled to or integrally formed with the second conductive portion, wherein the non-conductive member is arranged to be disposed between the first conductive portion and the second conductive portion when the electronic device is in the folded state.

According to a tenth example, there is provided the electronic device of any of the first to fifth examples, further comprising a support coupled to the first conductive portion and arranged to protrude from a lower end surface of the first conductive portion toward the second conductive portion when the electronic device is in the folded state.

According to an eleventh example, there is provided the electronic device of the tenth example, further comprising a non-conductive member coupled to or integrally formed with the second conductive portion; wherein the non-conductive member is arranged to protrude from an upper end surface of the second conductive portion toward the support when the electronic device is in the folded state.

According to a twelfth example, there is provided the electronic device of any of the first to eleventh examples, wherein, in the folded state: the second housing and the third housing are folded toward a portion of the flexible display disposed on the first housing.

According to a thirteenth example, there is provided the electronic device of the twelfth example, wherein, in the folded state, the third housing is positioned between the first housing and the second housing.

According to a fourteenth example, there is provided the electronic device of any of the first to thirteenth examples, wherein the second housing is rotatably connected to the first side of the first housing by a first hinge member of the electronic device, and the third housing is rotatably connected to the second side of the first housing by a second hinge member of the electronic device.

According to a fifteenth example, there is provided the electronic device of any of the first to fourteenth examples, wherein the electronic device is configured to operate in a first state in which the second housing and/or the third housing is unfolded with respect to the first housing or operate in a second state in which the second housing and the third housing are folded with respect to the first housing, wherein the second state corresponds to the folded state; and wherein in the second state, the first conductive portion of the second housing and the second conductive portion of the third housing overlap each other in a direction in which the first, second, and third housings are arranged

According to a sixteenth example, there is provided the electronic device of any of the first to fifteenth examples, wherein at least a portion of the flexible display (202) is configured to be folded or unfolded.

While the disclosure has been shown and described with reference to exemplary embodiments thereof, it will be apparent to those of ordinary skill in the art that various changes in form and detail may be made thereto without departing from the spirit and scope of the present invention as defined by the following claims.

## Claims

1. An electronic device (101; 200; 300; 400; 500; 600; 700; 800), comprising:
a first housing (210);
a second housing (220) rotatably connected to one side of the first housing (210) and including a first conductive portion (223);
a third housing (230) rotatably connected to another side of the first housing (210);
a first hinge member (270) disposed between the first housing (210) and the second housing (220);
a second hinge member (280) disposed between the first housing (210) and the third housing (230); and
a flexible display (202) disposed on front surfaces of the first, second, and third housings (230), and wherein at least a portion of the flexible display (202) is configured to be folded or unfolded,
wherein in a state where the second housing(220) and the third housing(230) are folded toward a portion of the flexible display(202) disposed on the first housing(210), the first conductive portion(223) of the second housing(220) and a side portion(231) of the third housing(230) are spaced apart from each other.

2. The electronic device of claim 1, wherein the side portion (231) of the third housing (230) includes a second conductive portion (231) spaced apart from the first conductive portion (223), and
wherein the first conductive portion (223) is disposed at an edge (222) of the second housing (220) forming a side surface of the electronic device (200).

3. The electronic device of claim 2, wherein the edge (222) of the second housing (220) protrudes, in a direction intersecting with a direction in which the first, second, and third housings (210, 220, 230) are arranged, from a position where an end surface (231a) of the second conductive portion (231) is formed.

4. The electronic device of claim 2 or 3, wherein the first conductive portion (223) is spaced apart from the second conductive portion (231) in a direction intersecting with a direction in which the first, second, and third housings (210, 220, 230) are arranged.

5. The electronic device of any one of claims 2 to 4, wherein the first conductive portion (223) is spaced apart from the second conductive portion (231) in a direction in which the first, second, and third housings (210, 220, 230) are arranged.

6. The electronic device of any one of claims 2 to 5, further comprising a support (250) disposed between the first conductive portion (223) and the second conductive portion (231).

7. The electronic device of claim 6, wherein the support (350) includes:
a first supporting portion (356) coupled to the first conductive portion (223);
a second supporting portion (357) protruding from the first supporting portion (356); and
a third supporting portion (358) extending from the second supporting portion (357) to cover the second conductive portion (331).

8. The electronic device of claim 6 or 7, further comprising:
a second display (406) configured to be at least partially folded or unfolded;
a third cover (437) coupled to the third housing (430) and covering at least a portion of the second display (406); and
a cushioning member (459) disposed between the support (450) and the third cover (437).

9. The electronic device of any one of claims 2 to 8, further comprising a non-conductive member (690; 6900) coupled to the second conductive portion (631; 6310) and disposed between the first conductive portion (623) and the second conductive portion (631; 6310).

10. The electronic device of claim 9, wherein the non-conductive member (6900) is integrally formed with the second conductive portion (6310).

11. The electronic device of any one of claims 2 to 10, further comprising a support (750;
850) coupled to the first conductive portion (723; 823) and protruding from a lower end surface (723a; 823a) of the first conductive portion (723; 823) toward the second conductive portion (731; 831).

12. The electronic device of claim 11, further comprising a non-conductive member (860;
8600) coupled to the second conductive portion (831; 8310) and protruding from an upper end surface (831a; 8310a) of the second conductive portion (831; 8310) toward the support (850).

13. The electronic device of claim 12, wherein the non-conductive member (8600) is integrally formed with the second conductive portion (8310).

14. The electronic device of any one of claims 2 to 13, wherein the third housing (230) is positioned between the first housing (210) and the second housing (220).

15. The electronic device of any one of claims 2 to 14, wherein the electronic device (101; 200; 300; 400; 500; 600; 700; 800), operates in a first state in which the second housing (220) and the third housing (230) are unfolded with respect to the first housing (210) or operates in a second state in which the second housing (220) or the third housing (230) is folded with respect to the first housing (210), and
wherein in the second state, the first conductive portion (223) of the second housing (220) and the second conductive portion (231) of the third housing (230) overlap each other in a direction in which the first, second, and third housings (210, 220, 230) are arranged.
